# EUROPEAN PATENT APPLICATION

(11) **EP 4 807 664 A1**
(43) Date of publication of application: **16.09.2026**
(21) Application number: 24920570.9
(22) Date of filing: 28.11.2024
(51) Int. Cl.: G06T 5/60, G06T 11/60, G06N 3/0475, G06F 16/58, G06F 3/0484, G06F 3/04895, G06T 5/00

(54) **ELECTRONIC DEVICE FOR EXECUTING RESTORATION FUNCTION BY USING METADATA OF IMAGE, AND METHOD THEREOF**

(30) Priority: 26.01.2024 KR 20240012732; 12.03.2024 KR 20240034678
(71) Applicant: Samsung Electronics Co., Ltd., Suwon-si, Gyeonggi-do 16677 (KR)
(72) Inventor: YOO, Nagyeom, Suwon-si, Gyeonggi-do 16677 (KR); MUN, Jihun, Suwon-si, Gyeonggi-do 16677 (KR); KIM, Moonsoo, Suwon-si, Gyeonggi-do 16677 (KR); YEOM, Donghyun, Suwon-si, Gyeonggi-do 16677 (KR); SHIN, Sunghyuk, Suwon-si, Gyeonggi-do 16677 (KR)
(74) Representative: Gulde & Partner
(86) International application number: PCT/KR2024/019206
(87) International publication number: WO 2025/159319

(57) **Abstract**

An electronic device according to an embodiment may display, via a display, an edited image including a modified object, and a visual object for the modified object. The electronic device may receive user input for the visual object while displaying the edited image. The electronic device may obtain, on the basis of the user input, information for replacing the modified object with an artificial intelligence-generated object from metadata corresponding to the edited image. The electronic device may generate an artificial intelligence-generated image by executing an artificial intelligence model, using the edited image and the information. In response to the user input, the electronic device may display the artificial intelligence-generated image via the display.

## Description

### [Technical Field]

The disclosure relates to an electronic device and a method for executing a restoration function using metadata of an image.

### [Background Art]

Technologies for processing photographs and/or videos using artificial intelligence have been developed. For example, the technologies for recognizing one or more characters (or character strings) related to photographs and/or videos have been developed. As another example, the technologies for classifying subjects (e.g., objects including a person, an animal, and/or a vehicle) captured by photographs and/or videos have been developed.

The above information is presented as related art only to assist with an understanding of the disclosure. No determination has been made, and no assertion is made, as to whether any of the above might be applicable as prior art with regard to the disclosure.

### [Detailed Description of Invention]

### [Technical Solution]

An electronic device according to an embodiment may include a display, at least one processor including processing circuitry, and memory including one or more storage mediums, the memory storing instructions. The instructions may, when executed by the at least one processor individually or collectively, cause the electronic device to display, via the display, an edited image including a modified object and a visual object with respect to the modified object. The instructions may, when executed by the at least one processor individually or collectively, cause the electronic device to receive a user input with respect to the visual object while displaying the edited image. The instructions may, when executed by the at least one processor individually or collectively, cause the electronic device to, based on the user input, obtain information to replace the modified object with an artificial intelligence (AI) generated object from metadata corresponding to the edited image. The instructions may, when executed by the at least one processor individually or collectively, cause the electronic device to generate an AI generated image by executing an artificial intelligence model using the edited image and the information. The instructions may, when executed by the at least one processor individually or collectively, cause the electronic device to display, via the display, the AI generated image in response to the user input.

In an embodiment, a method of an electronic device including a display may be provided. The method may include displaying, via the display, an edited image including a modified object and a visual object with respect to the modified object. The method may include receiving a user input with respect to the visual object while displaying the edited image. The method may include, based on the user input, obtaining information to replace the modified object with an artificial intelligence (AI) generated object from metadata corresponding to the edited image. The method may include generating an AI generated image by executing an artificial intelligence model using the edited image and the information. The method may include displaying, via the display, the AI generated image in response to the user input.

In an embodiment, a non-transitory computer-readable storage medium including instructions may be provided. The instructions may, when executed by an electronic device including a display, cause the electronic device to display, via the display, an edited image including a modified object and a visual object with respect to the modified object. The instructions may, when executed by the electronic device, cause the electronic device to receive a user input with respect to the visual object while displaying the edited image. The instructions may, when executed by the electronic device, cause the electronic device to, based on the user input, obtain information to replace the modified object with an artificial intelligence (AI) generated object from metadata corresponding to the edited image. The instructions may, when executed by the electronic device, cause the electronic device to generate an AI generated image by executing an artificial intelligence model using the edited image and the information. The instructions may, when executed by the electronic device, cause the electronic device to display, via the display, the AI generated image in response to the user input.

An electronic device according to an embodiment may include a display, at least one processor including processing circuitry, and memory including one or more storage mediums, the memory storing instructions. The instructions, when executed individually or collectively by the at least one processor, may cause the electronic device to display, on the display, a viewer screen including an edited image corresponding to an original image and a visual object for representing a difference between the original image and the edited image. The instructions, when executed individually or collectively by the at least one processor, may cause the electronic device to receive an input associated with the visual object while displaying the viewer screen. The instructions, when executed individually or collectively by the at least one processor, may cause the electronic device to obtain, based on the input, information used to restore the original image using an artificial intelligence model from metadata of a file including the edited image. The instructions, when executed individually or collectively by the at least one processor, may cause the electronic device to execute the artificial intelligence model using the edited image and the information to generate a restored image. The instructions, when executed individually or collectively by the at least one processor, may cause the electronic device to display the restored image on the display in response to the input.

In an embodiment, a method of an electronic device including a display may be provided. The method may include displaying on the display a viewer screen including an edited image corresponding to an original image and a visual object for representing a difference between the original image and the edited image. The method may include receiving an input associated with the visual object while displaying the viewer screen. The method may include obtaining, based on the input, information used to restore the original image using an artificial intelligence model from metadata of a file including the edited image. The method may include generating a restored image by executing the artificial intelligence model using the edited image and the information. The method may include displaying the restored image on the display in response to the input.

In an embodiment, a non-transitory computer-readable storage medium including instructions may be provided. The instructions, when executed by an electronic device including a display, may cause the electronic device to display, on the display, a viewer screen including an edited image corresponding to an original image and a visual object for representing a difference between the original image and the edited image. The instructions, when executed by the electronic device, may cause the electronic device to receive an input associated with the visual object while displaying the viewer screen. The instructions, when executed by the electronic device, may cause the electronic device to obtain, based on the input, information used to restore the original image using an artificial intelligence model from metadata of a file including the edited image. The instructions, when executed by the electronic device, may cause the electronic device to execute the artificial intelligence model using the edited image and the information to generate a restored image. The instructions, when executed by the electronic device, may cause the electronic device to display the restored image on the display in response to the input.

In an embodiment, a non-transitory computer-readable storage medium including instructions may be provided. The instructions, when executed by an electronic device including a display, may cause the electronic device to display, on the display, a viewer screen including an edited image corresponding to an original image and an indicator corresponding to a first visual object area of the edited image. The instructions, when executed by the electronic device, may cause the electronic device to receive an input related to the indicator while displaying the viewer screen. The instructions, when executed by the electronic device, may cause the electronic device to generate, based on the input, a second visual object area using an artificial intelligence model such that the first visual object area in the edited image is replaced with the second visual object area of the original image having a position corresponding to the position of the first visual object area in the edited image.

In an embodiment, an electronic device may include a display, at least one processor including processing circuitry, and memory including one or more storage media, the memory storing instructions. The instructions, when executed individually or collectively by the at least one processor, may cause the electronic device to display, on the display, a viewer screen including an edited image corresponding to an original image and an indicator corresponding to a first visual object area of the edited image. The instructions, when executed individually or collectively by the at least one processor, may cause the electronic device to receive an input related to the indicator while displaying the viewer screen. The instructions, when executed individually or collectively by the at least one processor, may cause the electronic device to generate, based on the input, a second visual object area using an artificial intelligence model such that the first visual object area in the edited image is replaced with the second visual object area of the original image having a position corresponding to the position of the first visual object area in the edited image.

### [Brief Description of Drawings]

FIG. 1 illustrates an example operation of an electronic device for restoring an original image using a file including an edited image, according to an embodiment.
FIG. 2A and FIG. 2B illustrate block diagrams of an electronic device according to an embodiment.
FIG. 3 illustrates an example operation of an electronic device for generating an edited image for an original image.
FIGS. 4A and 4B illustrate example operations of an electronic device for generating a file including an edited image generated using a generative artificial intelligence model.
FIG. 5 illustrates an example operation of an electronic device for generating a restored image corresponding to an original image from an edited image included in a file.
FIG. 6A, FIG. 6B, FIG. 6C, FIG. 6D, FIG. 6E, and FIG. 6F illustrate example structures of an image restoration model executed by an electronic device according to an embodiment.
FIG. 7 illustrates an example operation of an electronic device for restoring an original image using pixel information stored in metadata of a file.
FIG. 8 illustrates an example operation of an electronic device for restoring an original image using pixel differences indicated by metadata of a file.
FIG. 9 illustrates an example operation of an electronic device for restoring an original image using pixel information and/or one or more prompts included in metadata of a file.
FIG. 10 illustrates an example operation of an electronic device for restoring an original image using feature information included in metadata of a file.
FIG. 11 illustrates an example operation of an electronic device for restoring an original image using one or more prompts included in metadata of a file.
FIG. 12 illustrates an example operation of an electronic device for restoring an original image using one or more prompts associated with the original image corresponding to an edited image of a file.
FIG. 13 illustrates an example operation of an electronic device for restoring an original image using position information and one or more prompts included in metadata of a file.
FIG. 14A and FIG. 14B illustrate example states of an electronic device for restoring an original image.
FIG. 15 illustrates example programs executed by an electronic device to simulate a generative artificial intelligence model.
FIG. 16 is a block diagram of an electronic device in a network environment according to various embodiments.

### [Mode for Carrying out the Invention]

Hereinafter, various embodiments of the disclosure will be described with reference to the accompanying drawings.

It should be appreciated that various embodiments of the present disclosure and the terms used therein are not intended to limit the technological features set forth herein to particular embodiments and include various changes, equivalents, or replacements of a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and/or B", "A, B, or C", and "at least one of A, B, and/or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspects (e.g., importance or order). In a case where an element (e.g., a first element) is referred to, with or without the term "operatively" or "communicatively", as "coupled" or "connected" to another element (e.g., a second element), it indicates that the element may be directly coupled to the other element or via a third element.

As used herein, the term "module" may include a unit implemented in hardware or firmware, and may be interchangeably used with other terms, for example, "logic", "block", "part", or "circuit". A module may be a single integral component, or a minimum unit or part thereof configured to perform one or more functions. For example, a module may be implemented with an application-specific integrated circuit (ASIC).

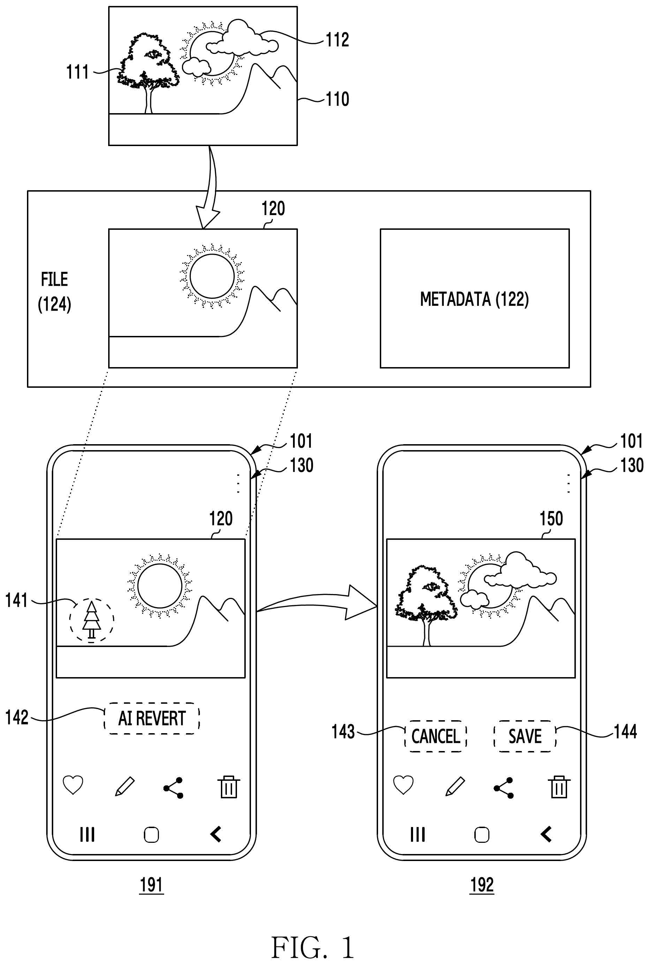

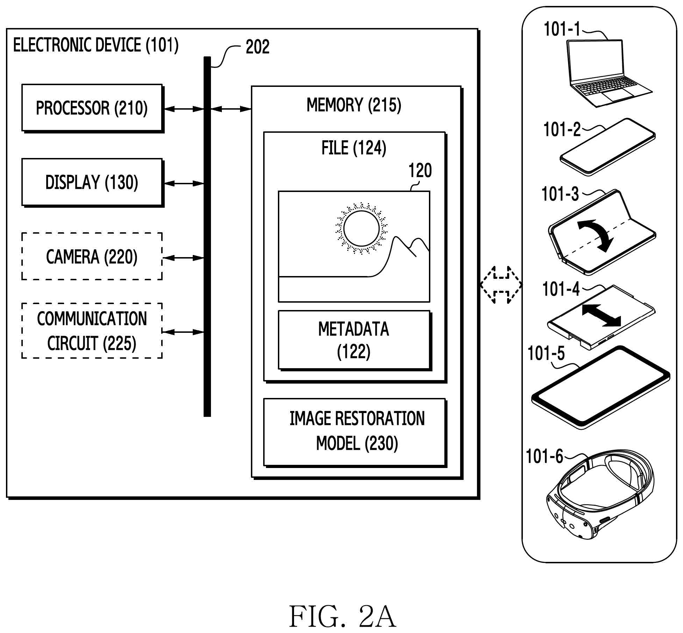

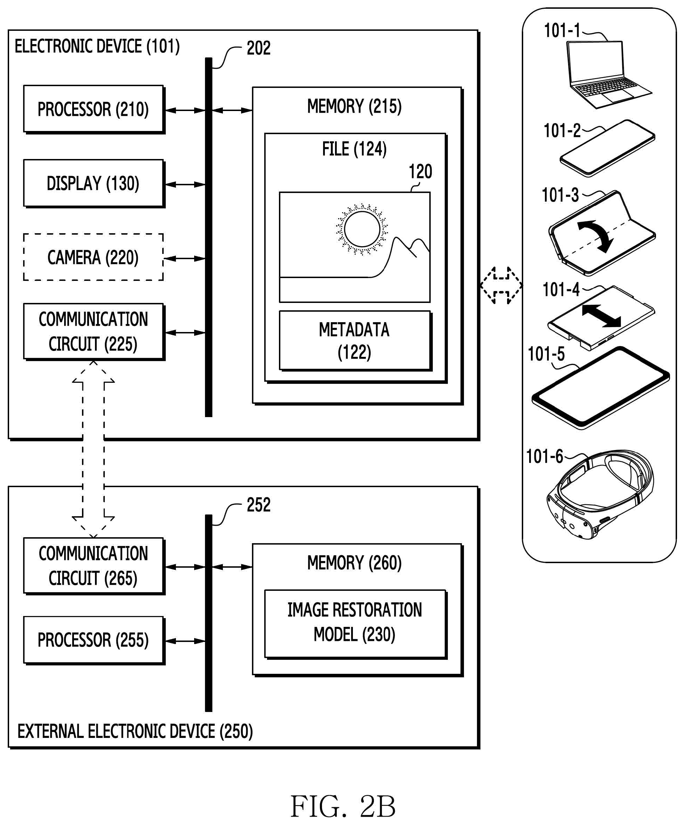

FIG. 1 illustrates an example operation of an electronic device 101 for restoring an original image 110 using a file 124 including an edited image 120, according to an embodiment. Referring to FIG. 1, the electronic device 101 having the form of a mobile phone is illustrated. The electronic device 101 may include a display 130 visible on one surface of a housing. Example form factors of the electronic device 101 including such a display 130 will be described with reference to FIG. 2A and/or FIG. 2B.

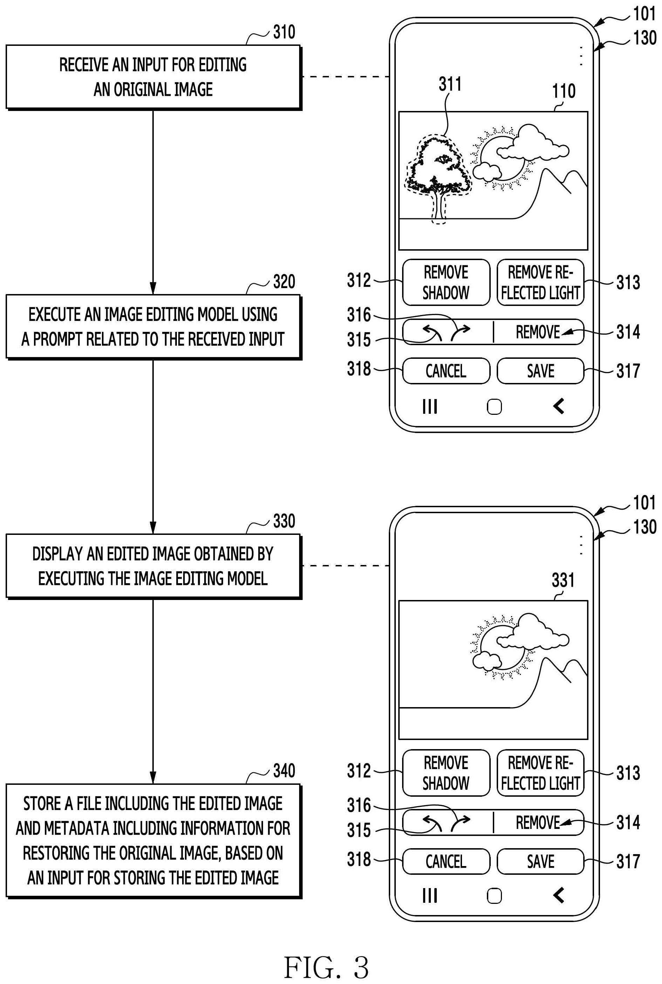

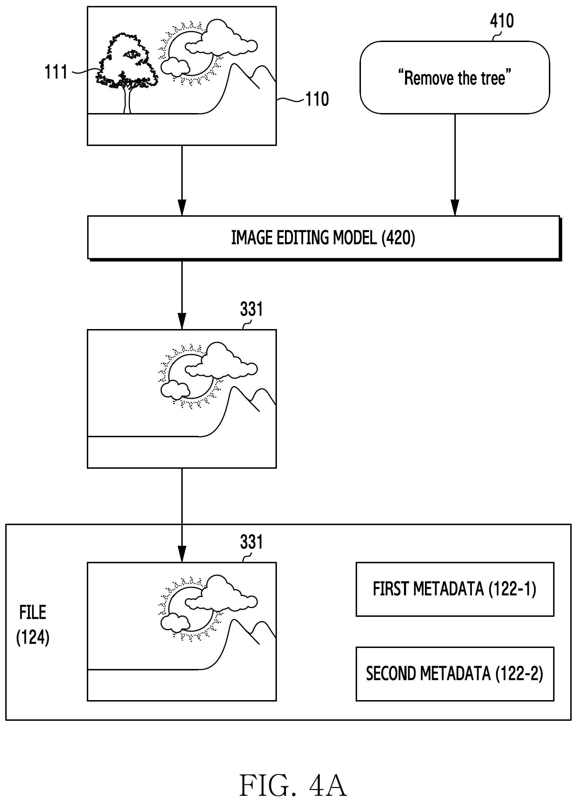

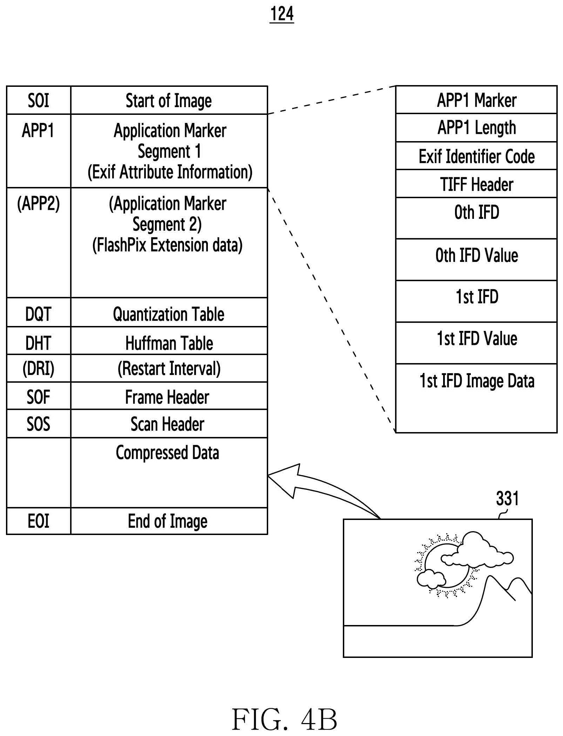

Referring to FIG. 1, example states 191 and 192 of the electronic device 101 executing a function related to the file 124 are illustrated. For example, the file 124 may include a Joint Photographic Experts Group (JPEG) file, a high efficiency image file format (HEIF) file, a high efficiency image container (HEIC) file, a portable network graphic (PNG) file, and/or a graphics interchange format (GIF) file. For example, the file 124 may include the edited image 120 corresponding to the original image 110. For example, the file 124 may include the edited image 120 and metadata 122 converted from the original image 110 based on execution of an artificial intelligence (AI) model (e.g., a generative AI model). An example operation of the electronic device 101 for generating or storing the file 124 including the edited image 120 and the metadata 122 will be described with reference to FIG. 3, FIG. 4A, and/or FIG. 4B. Referring to FIG. 1, the edited image 120, which was generated by changing a subject area 111 corresponding to a tree and a subject area 112 corresponding to a cloud in the original image 110, may be stored in the file 124.

Referring to the example state 191 of FIG. 1, according to an embodiment, the electronic device 101 may display, on the display 130, a viewer screen including the edited image 120 corresponding to the original image 110 and a visual object (e.g., visual objects 141 and 142) for indicating a difference between the original image 110 and the edited image 120. For example, the electronic device 101 may display the visual object 141 having a position overlapped on the edited image 120. The position on the edited image 120 where the visual object 141 is displayed may be related to the difference between the original image 110 and the edited image 120. For example, the electronic device 101 may display the visual object 141 having a position on the edited image 120 corresponding to a position of at least a portion of the original image 110 that is different from the edited image 120. The embodiment is not limited thereto, and the electronic device 101 may display the visual object 142 in the form of a button including designated text (e.g., "AI Revert") indicating restoration of the original image 110, on a portion of the display 130 spaced apart from the edited image 120.

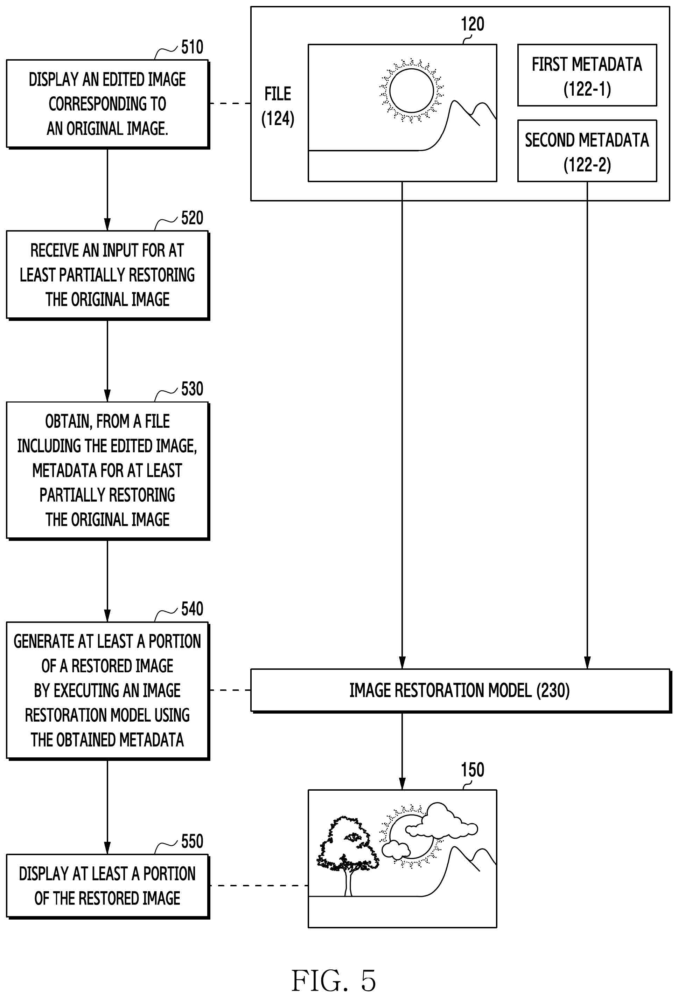

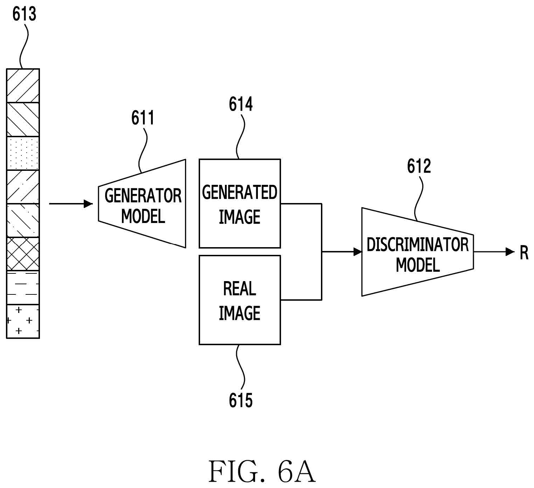

According to an embodiment, while displaying the viewer screen, the electronic device 101 may receive an input (e.g., a tap gesture onto the visual object 141) related to the visual object (e.g., the visual objects 141 and 142). For example, the electronic device 101 may receive an input indicating a selection of the visual object 141. Based on the input, the electronic device 101 may obtain, from the metadata 122 of the file 124 including the edited image 120, information used to restore the original image 110 using the artificial intelligence model. The electronic device 101 may generate a restored image 150 associated with the original image 110 by executing the artificial intelligence model using the edited image 120 and the information. An example operation of the electronic device 101 for generating the restored image 150 will be described with reference to FIG. 5. The artificial intelligence model may include a computational model executed by the electronic device 101 to simulate neural activities of a living body (e.g., inference, recognition, and/or creation). The artificial intelligence model will be described with reference to FIGS. 6A to 6F.

Referring to FIG. 1, in response to an input indicating a selection of a visual object (e.g., any one of the visual objects 141 and 142), the electronic device 101 may display the restored image 150 on the display 130 in response to the input. The state 192 of FIG. 1 may include an example state in which the restored image 150 is displayed on the display 130.

In the state 192, the electronic device 101 displaying the restored image 150, which replaced the edited image 120 stored in the file 124, may display a visual object 144 related to a function of generating and/or storing a file (e.g., the file 124 of FIG. 1) including the restored image 150. For example, the visual object 144 having a form of a button including designated text such as "Save" is illustrated, but the embodiment is not limited thereto. For example, in response to an input indicating a selection of the visual object 144, the electronic device 101 may generate or store the file including the restored image 150. For example, in response to an input indicating a selection of the visual object 144, the electronic device 101 may replace the edited image 120 stored in the file 124 with the restored image 150.

In the state 192, the electronic device 101 may display a visual object 143 for switching to the state 191 prior to the state 192 in which the restored image 150 is displayed. For example, the visual object 143 having a form of a button including designated text such as "Cancel" is illustrated, but the embodiment is not limited thereto. For example, in response to an input indicating a selection of the visual object 143, the electronic device 101 may switch to the state 191 prior to the state 192. For example, in response to an input indicating a selection of the visual object 143, the electronic device 101 may stop displaying the viewer screen related to the restored image 150 (or the edited image 120). For example, in response to an input indicating a selection of the visual object 143, the electronic device 101 may discard the change from the edited image 120 of the file 124 to the restored image 150.

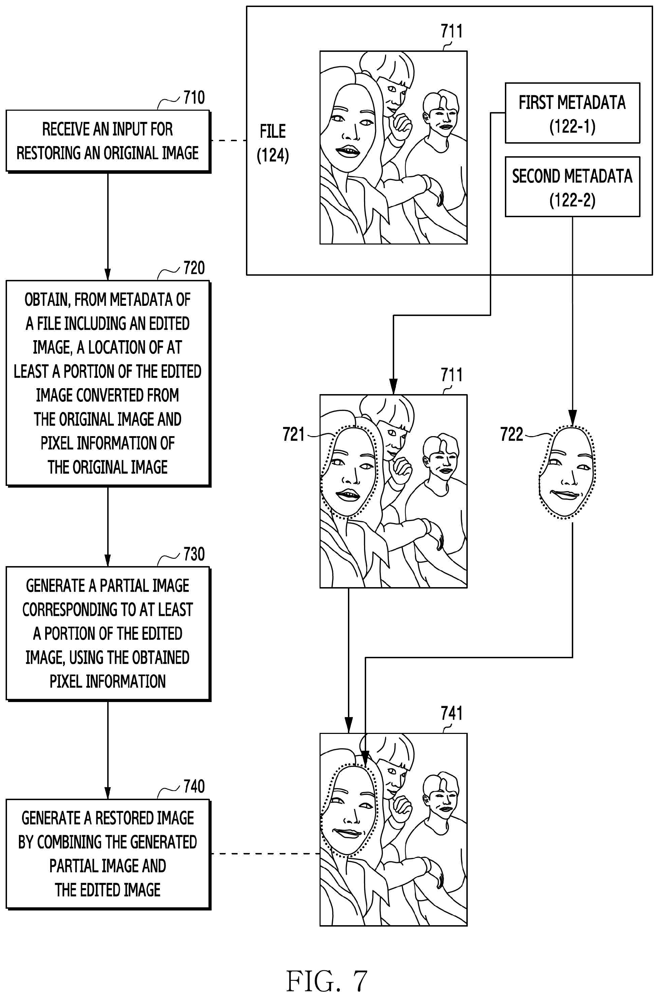

According to an embodiment, the electronic device 101 may execute the artificial intelligence (AI) model using information included in the metadata 122 to restore the original image 110 prior to the edited image 120. An example operation of the electronic device 101 for generating the restored image 150 associated with the original image 110, using the information included in the metadata 122, will be described with reference to FIGS. 7 to 13.

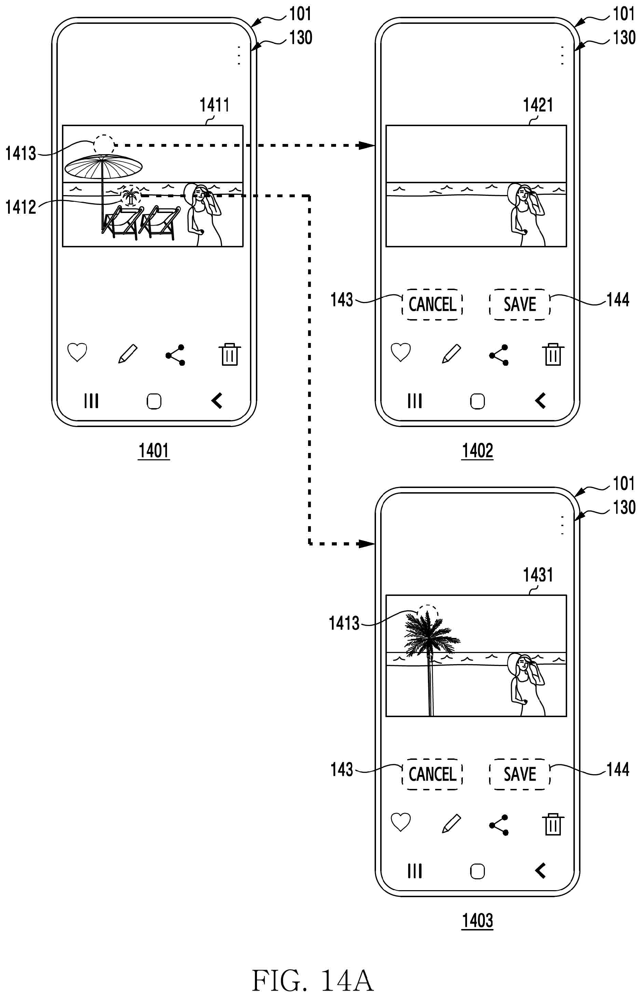

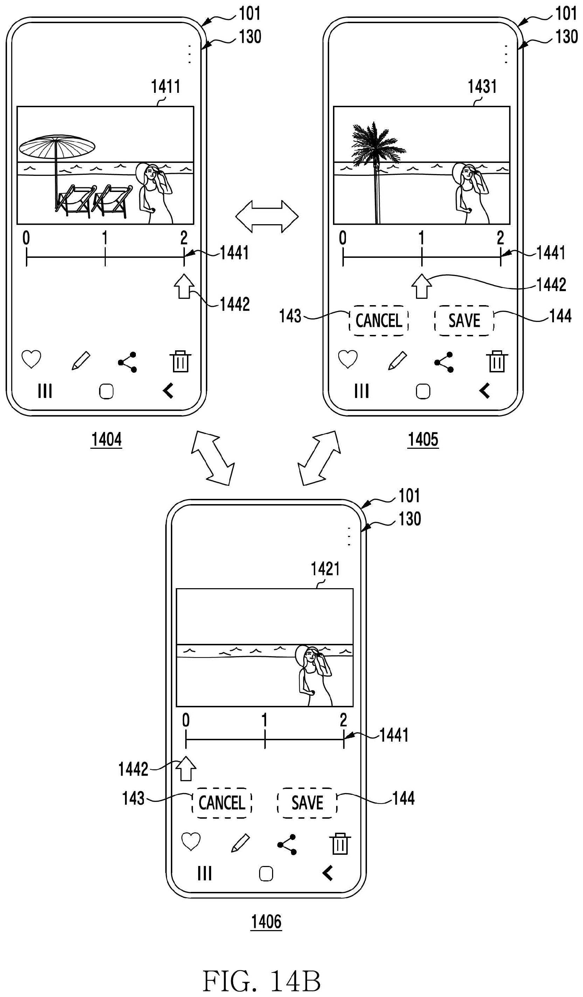

For example, the original image 110 and/or information indicating the history of editing the original image 110 using an artificial intelligence model (e.g., a generative artificial intelligence model) may be stored in the metadata 122. For example, from a file 124 including only the edited image 120 without the original image 110, the electronic device 101 may obtain the information from the metadata 122. Using the information, the electronic device 101 may generate or display the restored image 150 corresponding to the original image 110. For example, reduced-size information associated with the original image 110 is stored (in the metadata 122) in the file 124 including only the edited image 120 without the original image 110, so the memory capacity of the electronic device 101 may be saved. An example of a screen displayed by the electronic device 101 to generate the restored image 150 will be described with reference to FIG. 14A and/or FIG. 14B.

Hereinafter, an example of hardware configuration of the electronic device 101 according to an embodiment is described with reference to FIG. 2A and/or FIG. 2B.

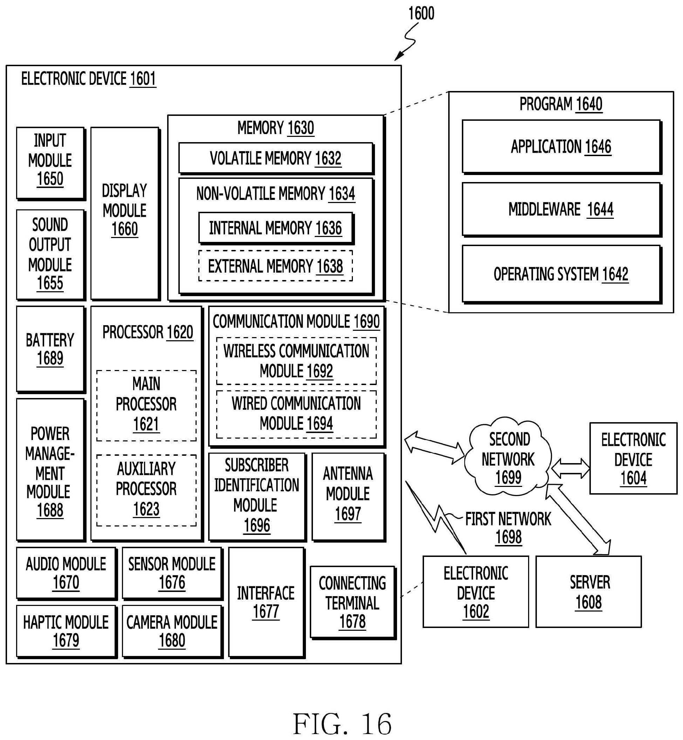

FIGS. 2A and 2B illustrate block diagrams of the electronic device 101 according to an embodiment. The electronic device 101 of FIG. 1 may be an example of the electronic device 101 described with reference to FIG. 2A and/or FIG. 2B. Referring to FIG. 2A and/or FIG. 2B, the electronic device 101 may include a processor 210, a memory 215, a display 130, a camera 220, and a communication circuit 225. The number and/or type of electronic components included in the electronic device 101 are not limited to those of the embodiments of FIG. 2A and/or FIG. 2B. For example, the electronic device 101 may further include electronic components to be described with reference to FIG. 16. For example, some of the electronic components of FIG. 2A (e.g., the camera 220 and/or the communication circuit 225) may be excluded from the electronic device 101, or any electronic components not illustrated in FIG. 2A and/or FIG. 2B may be further included in the electronic device 101.

Referring to FIG. 2A and/or FIG. 2B, the electronic device 101 may have various forms such as a laptop personal computer (PC) 101-1, smartphones (e.g., a bar-type smartphone 101-2, a foldable-type smartphone 101-3, or a slidable (or rollable)-type smartphone 101-4), a tablet PC 101-5, a head-mounted display (HMD) device 101-6, and other similar computing devices (not shown). The electronic device 101 may include a housing forming an appearance (or exterior) of the electronic device 101. The housing of the electronic device 101 may be referred to as a case and may be formed of plastic, glass, ceramics, fiber composites, metal (e.g., stainless steel, aluminum, and/or titanium), other suitable materials, or a combination of two or more of these materials. For example, the housing may be formed with a unibody configuration in which all or parts of the housing are assembled with a single structure (e.g., the bar-type smartphone 101-2), or may be formed with a plurality of structures (e.g., an internal frame structure, one or more structures forming the appearance of surfaces of the housing) (e.g., the foldable-type smartphone 101-3 including a plurality of parts).

For example, the processor 210 may be electrically, operably, or operatively coupled with other electronic components of the electronic device 101 including the memory 215. Referring to FIG. 2A and/or FIG. 2B, the processor 210 may be electrically connected to hardware components of the electronic device 101 via a communication bus 202. For example, the processor 210 being operatively coupled with an electronic component may represent that the processor 210 is directly connected to another electronic component. For example, the processor 210 being operatively coupled with a first electronic component may represent that the processor 210 is (indirectly) connected to the first electronic component via a second electronic component of the electronic device 101. For example, the processor 210 being operatively coupled with an electronic component may represent that the processor 210 is in a state capable of controlling the electronic component. For example, the processor 210 being operatively coupled with an electronic component may represent that an operation of the electronic component is caused based on information, data, signals, or commands provided from the processor 210. However, the disclosure is not limited thereto.

For example, the processor 210 of the electronic device 101 may include a circuit (e.g., processing circuitry) for processing data based on one or more instructions. The circuit for processing data may include, for example, an arithmetic logic unit (ALU), a floating point unit (FPU), a field programmable gate array (FPGA), a central processing unit (CPU), a graphic processing unit (GPU), a neural processing unit (NPU), and/or an application processor (AP). For example, the number of processors may be one or more. A processing circuit of the processor that loads (or fetches) instructions and performs calculations corresponding to the loaded instructions may be referred to or referenced as a core circuit (or core). For example, the processor may have a structure of a multi-core processor including a plurality of core circuits, such as e.g., dual-core, quad-core, hexa-core, or octa-core. Functions and/or operations described with reference to the disclosure may be performed individually or collectively by one or more processing circuits included in the processor 210.

For example, the display 130 of the electronic device 101 may output visualized information (for example, the screens displayed in the states 191 and 192 of FIG. 1) to a user. For example, the display 130 may be controlled by a controller (or the processor 210) such as a graphic processing unit (GPU) to output visualized information to the user. The display 130 may include a liquid crystal display (LCD), a plasma display panel (PDP), and/or one or more light emitting diodes (LEDs). The LEDs may include organic light emitting diodes (OLEDs). The display 130 may include a flat panel display (FPD), electronic paper, and/or a flexible display having an at least partially curved shape or a deformable shape.

For example, the display 130 of the electronic device 101 may include a sensor (e.g., a touch sensor panel (TSP)) for detecting an external object (e.g., a user's finger) on the display 130. For example, based on the TSP, the processor 210 may detect an external object contacting the display 130 or floating above the display 130. In response to detecting the external object, the processor 210 may execute a function related to a specific visual object corresponding to a position of the external object on the display 130 among visual objects being displayed on the display 130.

For example, the memory 215 of the electronic device 101 may include a circuit and/or a storage medium for storing data and/or instructions input to the processor 210 or output from the processor 210. The memory may include, for example, volatile memory such as random-access memory (RAM) and/or non-volatile memory such as read-only memory (ROM). The non-volatile memory may be referred to as storage. The volatile memory may include, for example, at least one of dynamic RAM (DRAM), static RAM (SRAM), cache RAM, or pseudo SRAM (PSRAM). The non-volatile memory may include, for example, at least one of programmable ROM (PROM), erasable PROM (EPROM), electrically erasable PROM (EEPROM), flash memory, a hard disk, a compact disc (CD), a solid state drive (SSD), or an embedded multi-media card (eMMC). The processor 210 of the electronic device 101 may execute instructions in the memory 215 within the electronic device 101 to perform functions and/or operations represented by the instructions. For example, in a case where the electronic device 101 includes at least one processor, the at least one processor may be configured to execute the instructions collectively or individually.

For example, the camera 220 of the electronic device 101 may include one or more optical sensors (e.g., charged coupled device (CCD) sensor or complementary metal oxide semiconductor (CMOS) sensor) that generate electrical signals representing color and/or brightness of light. A plurality of optical sensors included in the camera 220 may be arranged in the form of a two-dimensional (2D) array. The camera 220 may obtain electrical signals of each of the plurality of optical sensors substantially simultaneously to generate two-dimensional frame data corresponding to light reaching the optical sensors of a two-dimensional array. For example, photo data (e.g., the original image 110 of FIG. 1) captured using the camera 220 may refer to a single piece of two-dimensional frame data obtained from the camera 220. For example, video data captured using the camera 220 may refer to a sequence of a plurality of two-dimensional frame data obtained from the camera 220.

In an embodiment, the electronic device 101 may include hardware for supporting transmission and/or reception of electrical signals between the electronic device 101 and an external electronic device (e.g., an external electronic device 250 of FIG. 2B) through a communication circuit 225. The communication circuit 225 may include, for example, at least one of a modem, an antenna, or an optic/electronic (O/E) converter. The communication circuit 225 may support transmission and/or reception of electrical signals based on various types of protocols such as e.g., Ethernet, local area network (LAN), wide area network (WAN), wireless fidelity (WiFi), near field communication (NFC), Bluetooth, Bluetooth low energy (BLE), ZigBee, long term evolution (LTE), fifth generation (5G), new radio (NR), sixth generation (6G), and/or above-6G.

According to an embodiment, the electronic device 101 may process a file 124 stored in the memory 215 (e.g., one or more storage media in the electronic device 101 such as volatile memory and/or non-volatile memory). For example, the processor 210 may control the display 130 to visualize an edited image 120 included in the file 124. The file 124 may include metadata 122 related to the edited image 120. In the file 124 having a JPEG format, the edited image 120 and the metadata 122 may be arranged according to an international standard organization (ISO) format referred to as an exchangeable image file (EXIF) (e.g., an example format illustrated in FIG. 4B). The metadata 122 may be integrally included in the file 124, or may be stored in another file and/or a database connected to the file 124.

In an embodiment, the processor 210 of the electronic device 101 may execute a function of at least partially changing the edited image 120 using the metadata 122. The function may include generating a restored image (e.g., the restored image 150 of FIG. 1) corresponding to the edited image 120, using information included in the metadata 122. The restored image may include content of an original image (e.g., the original image 110 of FIG. 1) corresponding to the edited image 120. The function may include generating an intermediate version of an edited image between the edited image 120 and the original image, using information included in the metadata 122.

In an embodiment, an artificial intelligence (AI) model (e.g., an image restoration model 230) for the function may be installed in the electronic device 101. Hereinafter, an artificial intelligence model may refer to a computational model that simulates or mimics the neural activities of a living body and a set of programs for executing the computational model.

In an embodiment, the artificial intelligence model being installed in the electronic device 101 may imply that resources related to the artificial intelligence model (e.g., equations included in the computational model and weights, parameters, and/or coefficients related to the formulas) and instructions are stored in the memory 215, for execution of the artificial intelligence model using only the processor 210 of the electronic device 101. In a case where an artificial intelligence model such as the image restoration model 230 is installed in the electronic device 101, the processor 210 may independently execute a function of restoring the original image using the edited image 120 without an external electronic device. An artificial intelligence model installed in the electronic device 101 to be independently executed by the electronic device 101 may be referred to as an on-device model.

Referring to FIG. 2A, the processor 210 of the electronic device 101 may at least partially change the edited image 120 by executing an on-device model (e.g., the image restoration model 230) stored in the memory 215. The embodiment is not limited thereto. Referring to FIG. 2B, the electronic device 101 may communicate with an external electronic device 250, referred to as a server, to execute a function of restoring an original image using the file 124 including the edited image 120. For example, the processor 210 may transmit at least a portion of the file 124 (e.g., the edited image 120 and/or the metadata 122) to the external electronic device 250 via the communication circuit 225. The processor 210 may transmit the at least a portion of the file 124 to the external electronic device 250 together with a command (or request) for restoring the original image.

Referring to FIG. 2B, the external electronic device 250 may include a processor 255, a memory 260, and a communication circuit 265. The processor 255, the memory 260, and the communication circuit 265 may be electrically and/or operatively coupled through a communication bus 252. The processor 255, the memory 260, and the communication circuit 265 of the external electronic device 250 may correspond to the processor 210, the memory 215, and the communication circuit 225 of the electronic device 101, respectively. At least a portion of the descriptions of the processor 255, the memory 260, and the communication circuit 265 of the external electronic device 250 overlapping the descriptions of the processor 210, the memory 215, and the communication circuit 225 of the electronic device 101 may be omitted.

Referring to FIG. 2B, an embodiment in which the image restoration model 230 is installed in the external electronic device 250 is illustrated. In the embodiment of FIG. 2B, the processor 255, having received a signal for restoring an original image using the file 124 from the electronic device 101, may execute the image restoration model 230 installed in the external electronic device 250. For example, by executing the image restoration model 230 using the metadata 122 included in the signal, the processor 255 may generate a restored image (e.g., the restored image 150 of FIG. 1) representing the original image corresponding to the edited image 120. The processor 255 may transmit the generated restored image (or the signal including the restored image) to the electronic device 101 through the communication circuit 265. The processor 210, having received the restored image through the communication circuit 225, may control the display 130 to display the restored image.

As described above, the processor 210 of the electronic device 101 according to an embodiment may restore the original image corresponding to the edited image 120 using the image restoration model 230 installed in the electronic device 101 and/or the external electronic device 250. The image restoration model 230 installed in the electronic device 101 and/or the external electronic device 250 may be trained to restore the original image, using the edited image 120 of the original image and the metadata 122 associated with the original image stored in the edited image 120. In an embodiment, upon generating the file 124, the processor 210 may use information associated with the original image to train or update the artificial intelligence model related to restoration of the original image (e.g., the image restoration model 230 of FIG. 2A and/or FIG. 2B). The training may be performed so that the artificial intelligence model generates or outputs a prompt optimized for restoring the original image. For example, the prompt may be generated by a dedicated artificial intelligence model (e.g., a prompt inference model) configured to infer or generate the prompt. For example, the prompt inference model may be trained together while the artificial intelligence model for changing and/or restoring the original image is trained. Based on completion of the training, the artificial intelligence model may be used as an artificial intelligence model for restoring the original image from the file 124. The file 124 including the edited image 120 among the original image or the edited image 120 may not include the original image to reduce the size of the file 124, and may further include the metadata 122 including information required to restore the original image. The information may be connected (or linked) to the edited image 120. The information stored in the metadata 122 to restore the original image may include at least one of the data exemplified in Table 1 below.

**Table 1**

| **Type (or Category) of Information** | **Description** |
|---|---|
| Pixel information | Color, brightness, and/or saturation of at least one pixel of an original image |
| One or more first prompts | A prompt input when generating an edited image 120 from an original image |
| One or more second prompts | A prompt including one or more words (e.g., keywords) for describing an original image |
| Edge information (or edge image) | Information representing a boundary line of at least one subject area of an original image |
| Layout information | Information representing position, size, and/or shape of at least one subject area of an original image |
| Global positioning system (GPS) information | Information representing a point where an original image was obtained |
| Feature information | A feature vector (e.g., latent vector) and/or feature points (or key points) for at least a portion of an original image |

Referring to Table 1, the pixel information may represent color, brightness, and/or saturation of at least one pixel of an original image, based on a resolution equal to or lower than the resolution of the original image and/or the edited image 120. Hereinafter, an example operation of the electronic device 101 for generating the file 124 including the edited image 120 of FIG. 1, FIG. 2A, and/or FIG. 2B is described with reference to FIG. 3.

FIG. 3 illustrates an example operation of the electronic device 101 for generating an edited image 331 for an original image 110. The electronic device 101 of FIG. 1, FIG. 2A, and FIG. 2B and/or the processor 210 of FIG. 2A and/or FIG. 2B may perform operations described with reference to FIG. 3. The sequence of the operations in FIG. 3 is of an example only, and according to an embodiment, the electronic device 101 may perform the operations of FIG. 3 in a sequence different from the sequence illustrated in FIG. 3. In an embodiment, the electronic device 101 may perform at least two of the operations of FIG. 3 substantially simultaneously (e.g., multi-tasking and/or multi-threading).

Referring to FIG. 3, the electronic device 101 may display a screen including the original image 110 on a display 130. The screen may be provided by a software application for browsing images and/or videos stored in the electronic device 101, such as Gallery application. The electronic device 101 may display visual objects 312, 313, 314, 315, 316, 317, and 318 related to editing of the original image 110, along with the original image 110, on the screen including the original image 110.

For example, the visual object 312 may be related to a function of reducing or removing a shadow represented in the original image 110 (or selected by an input associated with the original image 110). For example, the visual object 313 may be related to a function of reducing or removing reflected light represented in the original image 110. For example, the visual object 315 may be related to a function of sequentially reverting editing actions applied to the original image 110 by one or more inputs (e.g., undo). For example, the visual object 316 may be related to a function of re-executing the function canceled by the visual object 315 (e.g., redo). For example, the visual object 314 may be related to a function of removing a subject from the original image 110 by changing at least a portion representing the subject in the original image 110. For example, the visual object 317 may be related to a function of storing a result of editing the original image 110 displayed on the screen in a file (e.g., the file 124 of FIG. 1). For example, the visual object 318 may be related to a function of stopping or canceling the editing of the original image 110.

Referring to FIG. 3, in operation 310, according to an embodiment, a processor of the electronic device 101 may receive an input for editing the original image 110. Referring to FIG. 3, the input of operation 310 may include a first input indicating a selection of a portion 311 related to an example subject such as e.g., a tree. The input of operation 310 may include a second input indicating a selection of the visual object 314 received in a state that a line (e.g., a dashed line) representing the portion 311 according to the first input is displayed on the original image 110. In response to the second input, the electronic device 101 may perform another operation following the operation 310. The present embodiment is not limited to an example of the first and second inputs, and the input of operation 310 may include another input indicating a selection of any one of the visual objects 312 and 313.

Referring to FIG. 3, in operation 320, the processor of the electronic device 101 according to an embodiment may execute an image editing model using a prompt related to the received input. In the disclosure, a prompt may refer to a natural language or ordinary language sentence to be input to the image editing model. Natural language may refer to a language used in the daily life of mankind. A prompt may refer to a natural language sentence binarized based on the binary code system such as e.g., Unicode (or ASCII code).

Referring to FIG. 3, in a state in which the example second input for selecting the visual object 314 is received, the electronic device 101 may generate a prompt based on the function of the visual object 314. In response to the second input received after the first input indicating the selection of the portion 311, the electronic device 101 may generate a prompt (e.g., "Remove the tree") for removing the subject (e.g., a tree) captured in the portion 311. The embodiment is not limited thereto. For example, the electronic device 101 may generate a prompt from an utterance detected using an analysis of an audio signal based on speech-to-text (STT). For example, the electronic device 101 may display a visual object such as a text box on the display 130 and may directly receive a prompt from a user through the text box. An example operation of the electronic device 101 for executing the image editing model using the prompt will be described with reference to FIG. 4A and/or FIG. 4B.

Referring to FIG. 3, in operation 330, according to an embodiment, the processor of the electronic device 101 may display an edited image 331 obtained by executing the image editing model. The electronic device 101 may generate or obtain the edited image 331 by performing calculations represented by the image editing model to which the prompt of the operation 320 is input. The electronic device 101 may display the generated edited image 331 on the display 130.

Referring to FIG. 3, in operation 340, according to an embodiment, the processor of the electronic device 101 may store a file (e.g., the file 124 of FIG. 1) including metadata (e.g., the metadata 122 of FIG. 1) including information for restoring the original image 110, based on an input for storing the edited image 331. The input of the operation 340 may include an input indicating a selection of the visual object 317. In response to the input of the operation 340, the electronic device 101 may generate or store the file including the edited image 331. In response to the input of the operation 340, the electronic device 101 may generate metadata including information for restoring the original image 110. The metadata may be included in or inserted into the file including the edited image 331. The information for restoring the original image 110 may include information (e.g., information in Table 1) required for execution of an image restoration model (e.g., the image restoration model 230 of FIG. 2A and/or FIG. 2B).

As described above, according to an embodiment, after editing the original image 110 using a generative artificial intelligence model such as the image editing model, the electronic device 101 may store the edited image 331 for the original image 110 and the metadata including information for restoring the edited image 331 to the original image 110. For example, the electronic device 101 having received the input of the operation 340 may remove the original image 110. The information stored in the metadata may be related to (or linked to) at least a portion edited by a user input within the original image 110. For example, using a file including the edited image 331 without the original image 110, the electronic device 101 may restore the original image 110.

Hereinafter, an example operation of the electronic device 101 for executing the image editing model of the operation 320 is described with reference to FIG. 4A and/or FIG. 4B.

FIG. 4A and/or FIG. 4B illustrate an example operation of an electronic device for generating a file 124 including an edited image 331 generated using a generative artificial intelligence (AI) model (e.g., an image editing model 420). The electronic device 101 of FIG. 1, FIG. 2A, and FIG. 2B and/or the processor 210 of FIG. 2A and/or FIG. 2B may perform operations described with reference to FIG. 4A and/or FIG. 4B. The operation of the electronic device described with reference to FIG. 4A and/or FIG. 4B may be related to at least one of the operations in FIG. 3 (e.g., the operation 320).

Referring to FIG. 4A, according to an embodiment, the electronic device may obtain a prompt 410 (e.g., "Remove the tree") associated with the original image 110. For example, the prompt 410 may be generated by the electronic device having received a touch input (e.g., a touch input on the visual object 317 of FIG. 3) received through a display. For example, the prompt 410 may correspond to a user's utterance detected by an audio signal received through a microphone. For example, the prompt 410 may be received from a user via a keyboard (or a software keyboard and/or a virtual keyboard displayed on the display of the electronic device).

Referring to FIG. 4A, the electronic device having obtained the prompt 410 may execute the image editing model 420 using the prompt 410 and the original image 110. For example, the image editing model 420 may be installed in the electronic device 101 in the form of an on-device model. For example, the electronic device 101 may communicate with an external electronic device (e.g., the external electronic device 250 of FIG. 2B) to execute the image editing model 420 installed in the external electronic device.

For example, in case of receiving the prompt 410 indicating removal of a specific subject (e.g., a tree) included in the image 110, the electronic device may obtain, from the image editing model 420, the edited image 331 generated by changing a subject area 111 corresponding to the subject within the original image 110. For example, in response to the prompt 410, the image editing model 420 may generate a partial image (e.g., a partial image related to the background of the original image 110) to be positioned in the subject area 111, and may be trained to replace the subject area 111 of the original image 110 with the generated partial image.

According to an embodiment, in response to an input for storing the edited image 331, the electronic device 101 may generate or store the file 124 including the edited image 331. For example, the electronic device 101 may store information used to generate the edited image 331 from the original image 110 (e.g., the prompt 410) in the first metadata 122-1 of the file 124. For example, the electronic device 101 may store information to be used to restore the original image 110 in the second metadata 122-2 of the file 124.

In the disclosure, the terms of metadata may be numbered such as e.g., the first metadata 122-1 and the second metadata 122-2. Such numbered metadata terms may be used for logical classification according to content, purpose, type, and/or format of metadata. For example, all of the numbered metadata may be stored in a logical area set to store metadata in the file 124. The embodiment is not limited thereto, and the numbered metadata may be stored separately in the file 124 (or a storage medium for storing metadata).

For example, the first metadata 122-1 may include history information for the edited image 331 stored in the file 124, and the second metadata 122-2 may include reduced-size information for restoring a source (e.g., the original image 110) of the edited image 331. For example, the history information stored in the first metadata 122-1 may include a value (or flag) indicating whether the edited image 331 has been generated or edited by a generative artificial intelligence model (e.g., the image editing model 420). For example, the history information stored in the first metadata 122-1 may include time at which the edited image 331 was generated (e.g., a date and/or a timestamp) and area information indicating at least a portion of the edited image 331 changed from the original image 110.

In an embodiment, in the file 124, the edited image 331 and metadata (e.g., the first metadata 122-1 and/or the second metadata 122-2) may be arranged based on an EXIF format. Referring to FIG. 4B, an example structure of the file 124 based on the EXIF format is illustrated. The file 124 may start from a segment where a designated value indicating the start of the file 124 (e.g., Start of Image) is stored. Following the segment, one or more application segments (e.g., APP1, APP2) may be formed in the file 124. The application segments of the file 124 may include a marker (APP1 Marker) indicating the start of the application segment and the length (APP1 Length) of the application segment. The application segments of the file 124 may include an application segment code (EXIF identifier code), a tagged image file format (TIFF) header, and image file directory (IFD) values. For example, a 0th IFD value may include information (e.g., a generation time point of the file 124) related to an image (e.g., the edited image 331) in the file 124. For example, a 1st IFD value may include a thumbnail image corresponding to the file 124. Metadata of the file 124 may be stored in the application segments of the file 124.

The file 124 based on the EXIF format may further include a DQT (Define-Quantization-Tables) segment, a DHT (Define-Huffman-Tables) segment, a DRI (Define-Restart-Interval) segment, an SOF (Start of Frame) segment, and/or an SOS (Start-of-Scan) segment, following one or more application segments. After the SOS segment, the file 124 may include compressed data representing the edited image 331. At the end of the file 124, a designated value indicating the end of the file 124 (End of Image) may be stored.

As described above, according to an embodiment, when generating an edited image from an original image, the electronic device may generate or store the file 124 including the edited image between the original image or the edited image. The electronic device may add information for restoring the original image to metadata included in the file 124. The embodiment is not limited thereto, and the electronic device may generate a file including metadata to which information for generating the original image and the edited image is added. The metadata may be stored in a file different from the file 124 including the edited image. For example, in a case where the metadata is stored in the file different from the file 124, information (e.g., link information) indicating association with the other file (or the metadata) may be stored in the file 124. The information may be stored in the metadata of the file 124. For example, in a case where the metadata is stored in the file different from the file 124, the electronic device may manage a connection between the file 124 and the other file (e.g., establish and/or release the connection) using a database and/or a program.

Hereinafter, an example operation of the electronic device for restoring the original image from the file 124 generated based on the operation of the electronic device of FIG. 3, FIG. 4A, and/or FIG. 4B is described with reference to FIG. 5.

FIG. 5 illustrates an example operation of an electronic device for generating a restored image 150 corresponding to an original image from an edited image 120 included in a file 124. The electronic device 101 of FIG. 1, FIG. 2A, and FIG. 2B and/or the processor 210 of FIG. 2A and/or FIG. 2B may perform the operations described with reference to FIG. 5. A sequence of the operations in FIG. 5 is of an example only, and in an embodiment, the electronic device may perform the operations of FIG. 5 in a sequence different from that illustrated in FIG. 5. In an embodiment, the electronic device may perform at least two of the operations of FIG. 5 substantially simultaneously.

Referring to FIG. 5, in operation 510, according to an embodiment, the processor of the electronic device may display the edited image 120 corresponding to the original image. The processor may display the edited image 120 identified from a file (e.g., the file 124 of FIG. 1) on a display of the electronic device (e.g., the display 130 of FIG. 1). In a state in which the edited image 120 is displayed, the processor may determine whether the edited image 120 has been generated or edited using an artificial intelligence model (e.g., the image editing model 420 of FIG. 4A), using metadata (e.g., the first metadata 122-1 and/or the second metadata 122-2) stored in the file 124. In a case where it is determined that the edited image 120 is generated using the artificial intelligence model, the processor may display, on the display, a visual object (e.g., at least one of the visual objects 141 and 142 of FIG. 1) for restoring the original image.

Referring to FIG. 5, in operation 520, according to an embodiment, the processor of the electronic device may receive an input for at least partially restoring the original image. The input may include an input (e.g., a tap gesture onto the visual object) indicating a selection of the visual object for restoring the original image, displayed together with the edited image 120. Based on the input, the processor may perform operation 530.

Referring to FIG. 5, in operation 530, according to an embodiment, the processor of the electronic device may obtain, from the file 124 including the edited image 120, metadata (e.g., the first metadata 122-1 and/or the second metadata 122-2) for at least partially restoring the original image. The metadata may be generated or stored by the operations described with reference to FIG. 3, FIG. 4A, and/or FIG. 4B. The metadata of the operation 530 may include information required to restore the original image using the edited image 120, such as the information in Table 1.

Referring to FIG. 5, in operation 540, according to an embodiment, the processor of the electronic device may generate at least a portion of the restored image 150 by executing an image restoration model 230 using the obtained metadata. In an embodiment in which an on-device model is installed in the electronic device, the processor may obtain or generate at least a portion of the restored image 150 by executing the image restoration model 230 (e.g., the image restoration model 230 of FIG. 2A) installed in the electronic device, based on operation 540. In an embodiment connected to an external electronic device such as a server (e.g., the external electronic device 250 of FIG. 2B), the processor may communicate with the external electronic device based on operation 540 to cause execution of the image restoration model 230 (e.g., the image restoration model 230 of FIG. 2B) installed in the external electronic device. After causing the execution of the image restoration model 230 installed in the external electronic device, the processor may receive a signal related to at least a portion of the restored image 150 from the external electronic device. In terms of generation using an artificial intelligence model, such as e.g., the image restoration model 230, the restored image 150 may be referred to as an AI-generated image. A partial image (or visual object) generated by the artificial intelligence model to generate the restored image 150 may be referred to as an AI-generated object.

Referring to FIG. 5, in operation 550, according to an embodiment, the processor of the electronic device may display at least a portion of the restored image 150. In an embodiment of displaying the edited image 120 before the operation 550, the processor may control the display (e.g., the display 130 of FIG. 1) such that the edited image 120 displayed on the display is changed to the restored image 150.

Hereinafter, the image restoration model 230 executed by the electronic device according to an embodiment is described by way of example with reference to FIGS. 6A to 6F.

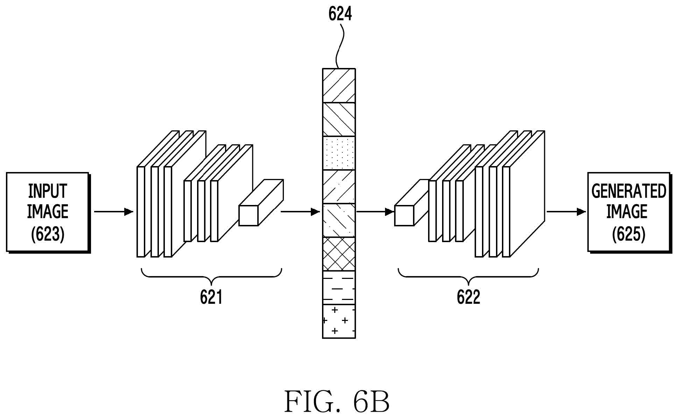

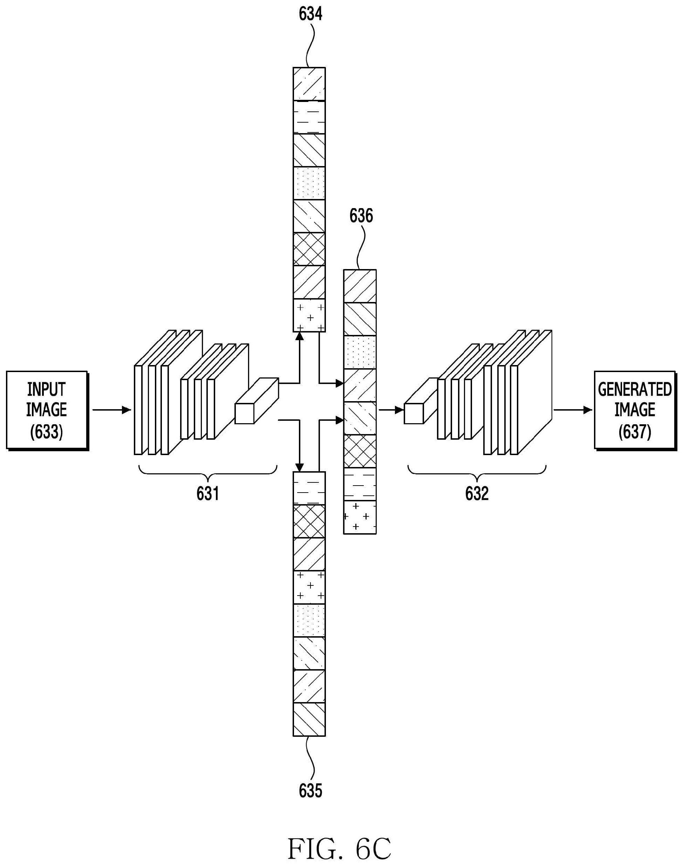

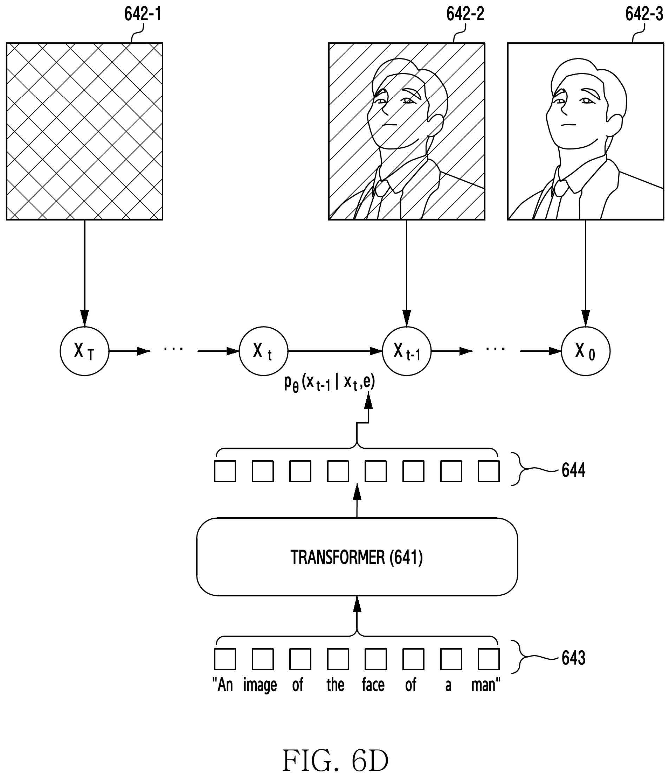

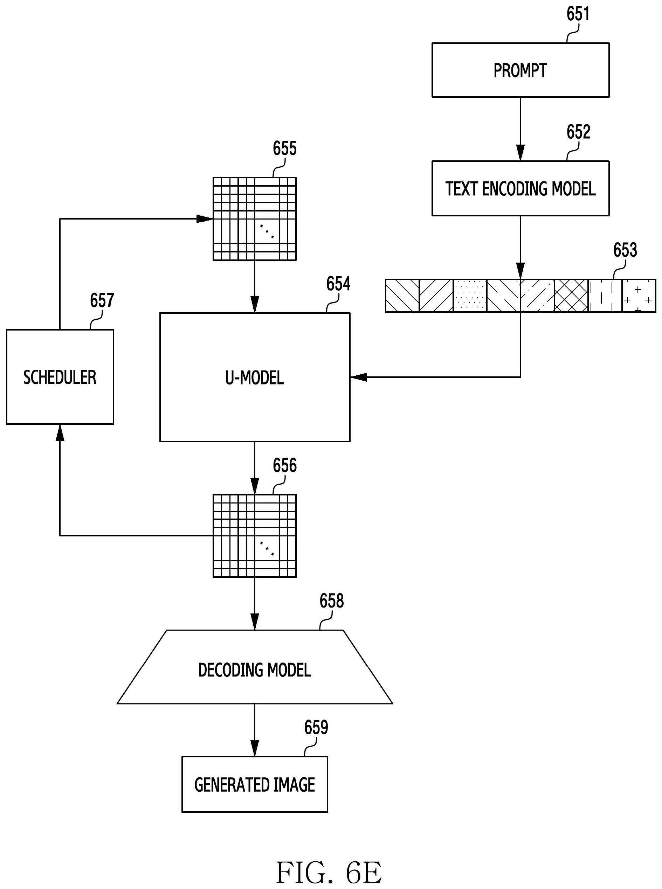

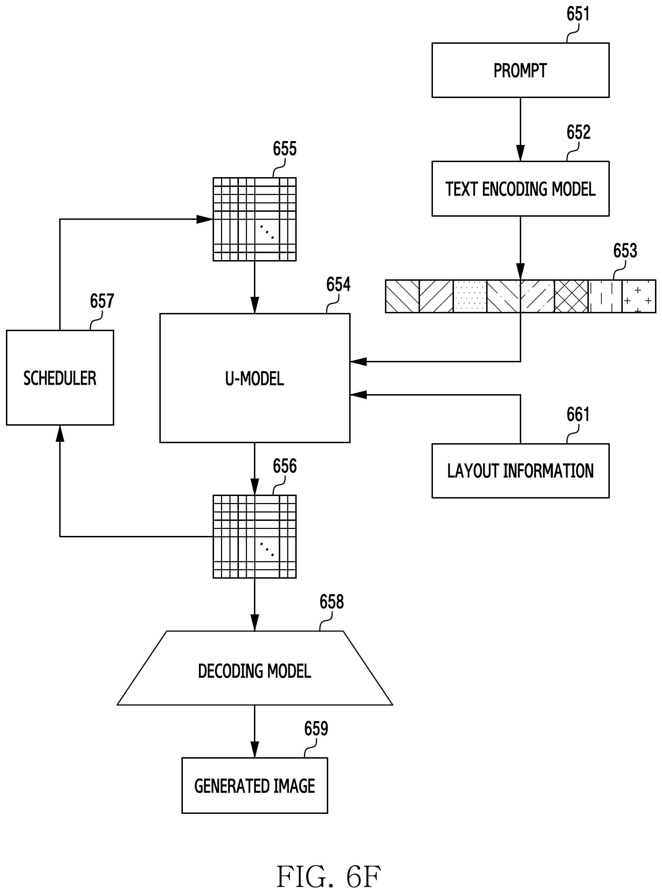

FIGS. 6A, 6B, 6C, 6D, 6E, and 6F each illustrate example structures of an image restoration model (e.g., the image restoration model 230 of FIG. 2A and/or FIG. 2B) executed by the electronic device according to an embodiment. The electronic device 101 of FIG. 1, FIG. 2A, and FIG. 2B and/or the processor 210 of FIG. 2A and/or FIG. 2B may execute or utilize the artificial intelligence model described with reference to FIGS. 6A to 6F as an image restoration model. The image restoration model may be referred to as a super-resolution model from the viewpoint of generating a high-resolution restored image from a file (e.g., the file 124 of FIG. 1) including an edited image. The image restoration model may be referred to as a generative artificial intelligence model from the viewpoint of generating a restored image. The image restoration model may be referred to as an autoencoder-based model based on a structure used to implement the model. The image restoration model may be referred to as a prompt model from the viewpoint of generating a restored image using a prompt.

In various embodiments of the disclosure, a generative artificial intelligence model, which is an artificial intelligence model trained using a set of a plurality of images (e.g., a training set and/or a training database), may refer to an artificial intelligence model trained to generate or output a new image approximated to the plurality of images.

Referring to FIG. 6A, artificial intelligence models (e.g., a generator model 611 and a discriminator model 612) trained based on generative adversarial networks (GANs) are illustrated. The generator model 611 may be trained to output a generated image 614 from input data (e.g., a latent vector 613 in a latent space). The discriminator model 612 may be trained to output a parameter R (e.g., a probability that an input image is generated by an artificial intelligence model) indicating whether an input image (e.g., the generated image 614 generated by the generator model 611 and/or a real image 615) has been generated by an artificial intelligence model.

For example, in case of executing the discriminator model 612 using the real image 615, the electronic device may obtain, from the discriminator model 612, a parameter indicating that the input image of the discriminator model 612 (the real image 615 in the above example) was not generated by the artificial intelligence model. For example, in case of executing the discriminator model 612 using the generated image 614, the electronic device may obtain, from the discriminator model 612, a parameter indicating that the input image of the discriminator model 612 (the generated image 614 in the above example) was generated by the artificial intelligence model.

In an embodiment, the generator model 611 may be trained such that the generated image 614 generated by the generator model 611 is determined by the discriminator model 612 as not having been generated by the artificial intelligence model. For example, the generator model 611 may be trained such that the probability, output by the discriminator model 612, that the input image is generated by the artificial intelligence model is reduced. The meaning of "it is determined by the discriminator model 612 that the input image is generated from an artificial intelligence model" may include a meaning that the input image is similar to an original image. The meaning of "it is determined by the discriminator model 612 that the input image is not generated from an artificial intelligence model" may include a meaning that the input image is different from the original image.

The training of the generator model 611 and/or the discriminator model 612 may be repeatedly performed for a plurality of generated images including the generated image 614. The training of the generator model 611 and/or the discriminator model 612 may be terminated when the generated image 614 is determined by the discriminator model 612 as not having been generated by the artificial intelligence model. For example, the training of the generator model 611 may be terminated when the generated image 614 having content, composition, and/or color distribution similar to those of the real image 615 is generated. The trained generator model 611 may be used as an image restoration model (e.g., the image restoration model 230 of FIG. 2A and/or FIG. 2B) for restoring the original image.

Referring to FIG. 6B, an artificial intelligence model having a structure of an autoencoder (AE) is illustrated. The artificial intelligence model may include an encoding model 621 and a decoding model 622. The artificial intelligence model having an autoencoder structure, including the encoding model 621 and the decoding model 622, may be trained to reduce a difference between an input image 623 input to the encoding model 621 and a generated image 625 output from the decoding model 622 (e.g., to generate the generated image 625 identical to the input image 623).

When the artificial intelligence model having the autoencoder structure is executed, dimension reduction based on the encoding model 621 may be performed. For example, feature information (e.g., a latent vector 624) having a size less than a size of the input image 623 may be output from the encoding model 621. The latent vector 624 is implicit information output from the encoding model 621, and the encoding model 621 may be trained to output the latent vector 624 having different elements for images input to the encoding model 621.

When the artificial intelligence model having the autoencoder structure is executed, dimension expansion based on the decoding model 622 may be performed. For example, from the feature information such as the latent vector 624, the decoding model 622 may be trained to output the generated image 625. The decoding model 622 may be trained to output the generated image 625 having the same resolution as the input image 623 and/or the same size as the input image 623. For example, the artificial intelligence model having the autoencoder structure may be trained to reduce or minimize a difference between the input image 623 and the generated image 625. Following the training, at least a portion of the artificial intelligence model including the decoding model 622 may be used as an image restoration model for restoring the original image.

Referring to FIG. 6C, an artificial intelligence model having the structure of a variational autoencoder (VAE) is illustrated. The artificial intelligence model having the VAE structure may include an encoding model 631 and a decoding model 632. In the artificial intelligence model having the VAE structure, the encoding model 631 may be trained to output a latent vector 636 including a mean vector 634 and a standard deviation vector 635 for an input image 633 (e.g., during training, at least one image included in a set of images set for training).

In an embodiment, the decoding model 632 may be trained to generate a generated image 637 using a probability distribution having characteristics of the input image 633 as random variables, based on the latent vector 636. For example, in case of being trained using a set of images for training, the decoding model 632 may be trained to perform dimension expansion based on the probability distribution of characteristics included in the images. After the training, using the probability distribution represented by the latent vector 636, the decoding model 632 may output the generated image 637 expressing one or more characteristics represented by the latent vector 636. After the training, at least a portion of the artificial intelligence model having the VAE structure including the decoding model 632 may be used as an image restoration model for restoring the original image.

Referring to FIG. 6D, an artificial intelligence model having a structure of a diffusion model (DM) is illustrated. In case of being trained using a set of images for training, the artificial intelligence model having the DM structure may be trained to compensate for and/or restore distortion (e.g., distortion based on noise and/or masking) of an image included in the set. For example, a corrupted version of the image included in the set (e.g., an image 642-1 completely contaminated by noise) may be input to the artificial intelligence model. Based on execution of the artificial intelligence model, a restored image 642-3 may be generated from the corrupted version of the image 642-1. A process of the artificial intelligence model generating the restored image 642-3 from the corrupted version of the image 642-1 may be referred to as denoising.

Referring to FIG. 6D, the artificial intelligence model having the DM structure may include an artificial intelligence model for natural language processing (e.g., a transformer 641). For example, by executing the transformer 641 using a prompt 643 (e.g., a natural language phrase and/or a natural language sentence, such as "An image of the face of a man"), information 644 capable of being input to the artificial intelligence model for denoising may be generated. The information 644 may include vectors (or tokens) generated from each of words (or morphemes) included in the prompt 643, based on tokenization.

For example, as the information 644 is input to the artificial intelligence model for denoising, the artificial intelligence model may be trained to generate the restored image 642-3 including characteristics represented by the prompt 643 from the corrupted version of the image 642-1. For example, the information 644 may be input to the artificial intelligence model in case that an intermediate version of an image 642-2 is generated from the corrupted version of the image 642-1. The information 644 input to the artificial intelligence model may function as a condition for generating the intermediate version of the image 642-2. After the training is completed, at least a portion of the artificial intelligence model including the transformer 641 may be used as an image restoration model for restoring the original image.

Referring to FIG. 6E, an artificial intelligence model having a structure of a latent diffusion model (LDM) is illustrated. The artificial intelligence model having the LDM structure may have a structure in which a structure based on contrastive language-image pre-training (CLIP) and/or VAE is combined with the artificial intelligence model having the DM structure of FIG. 6D. The artificial intelligence model having the LDM structure may include a text encoding model 652 that performs tokenization of a prompt 651. The text encoding model 652 may have a structure based on CLIP. Information 653 corresponding to the prompt 651 may be generated from the text encoding model 652. The information 653 may include vectors (or tokens) corresponding to each of words (or morphemes) included in the prompt 651, based on the tokenization.

Referring to FIG. 6E, the artificial intelligence model having the LDM structure may include a U-model 654 (or U-Net) and may include a scheduler 657 for repeatedly performing transformation of an image based on the U-model 654. The scheduler 657 is a program based on a scheduling algorithm and may be configured to repeatedly perform inputting an input image 655 to the U-model 654 and inputting an output image 656 output from the U-model 654 back as the input image 655 for the U-model 654.

Referring to FIG. 6E, in case that the U-model 654 is executed, information 653 corresponding to the prompt 651 may be input to the U-model 654 as a condition for generating the output image 656. Similar to the artificial intelligence model having the DM structure of FIG. 6D, the U-model 654 may be trained to perform denoising on the input image 655. The U-model 654 may be trained to perform the denoising based on a condition set by the information 653.

Referring to FIG. 6E, the artificial intelligence model having the LDM structure may include a decoding model 658 for generating a generated image 659, to be provided as a result of generating an image, from the output image 656 of the U-model 654. For example, the output image 656 finally output from the U-model 654 by the scheduler 657 may be converted into the generated image 659 by the decoding model 658. For example, based on execution of the decoding model 658, a resolution of the output image 656 may be increased or a size of the output image 656 may be expanded. The artificial intelligence model having the LDM structure of FIG. 6E may be used as an image restoration model for restoring the original image.

Referring to FIG. 6F, an artificial intelligence model having a structure of a layout diffusion model is illustrated. The artificial intelligence model of FIG. 6F may have a structure modified from the LDM structure of FIG. 6E so that layout information 661 can be input. The layout information 661 may be set to represent types of subjects respectively related to portions of the generated image 659 in order to guide a layout of the generated image 659. For example, the layout information 661 may include data representing bounding boxes indicating the portions of the generated image 659 where the subjects are to be located (e.g., coordinates of vertices of a bounding box, and a width and height of the bounding box). For example, the layout information 661 may include pixel-wise information representing the subjects expressed in each of the portions of the generated image 659. For example, the layout information 661 may include an image in which a figure of a designated color corresponding to a specific subject is drawn.

The U-model 654 of the artificial intelligence model having the structure of the layout diffusion model may be trained to process the layout information 661 based on an attention operation. For example, based on a query-key-value (QKV) attention algorithm, the layout information 661 may be synthesized with other information in the U-model 654. Based on the synthesization, in case of generating the output image 656 from the input image 655, the layout information 661 may function as a condition related to the output image 656. The artificial intelligence model having the structure of the layout diffusion model of FIG. 6F may be used as an image restoration model for restoring the original image.

As described above, in case of restoring an original image using a file (e.g., the file 124 of FIG. 1) including an edited image (e.g., the edited image 120 of FIG. 1), image restoration models having various structures may be used. Hereinafter, example operations of an electronic device for restoring an original image using the artificial intelligence model described with reference to FIGS. 6A to 6F are described with reference to FIGS. 7 to 13.

FIG. 7 illustrates an example operation of an electronic device for restoring an original image using pixel information 722 stored in metadata (e.g., second metadata 122-2) of a file 124. The electronic device 101 of FIG. 1, FIG. 2A, and FIG. 2B and/or the processor 210 of FIG. 2A and/or FIG. 2B may perform the operations described with reference to FIG. 7. At least one of the operations of FIG. 7 may be related to the operations of FIG. 5 or may be performed similarly. A sequence of the operations in FIG. 7 is of an example, and in an embodiment, the electronic device may perform the operations of FIG. 7 in a sequence different from that illustrated in FIG. 7. In an embodiment, the electronic device may perform at least two of the operations of FIG. 7 substantially simultaneously.

Referring to FIG. 7, in operation 710, according to an embodiment, the processor of the electronic device may receive an input for restoring an original image. The processor may receive the input of operation 710 while displaying a viewer screen including an edited image 711 on a display (e.g., the display 130 of FIG. 1), as in the state 191 of FIG. 1. For example, the input of operation 710 may include the input of operation 520 of FIG. 5.

Referring to FIG. 7, in operation 720, according to an embodiment, the processor of the electronic device may obtain, from metadata of the file including the edited image 711, a location of at least a portion (e.g., a portion 721) of the edited image 711 converted from the original image and pixel information 722 of the original image. In a case where the file 124 including the edited image 711 is generated based on the operations described with reference to FIG. 3, FIG. 4A, and/or FIG. 4B, the file 124 may include first metadata 122-1 related to a change history, generated during a change from the original image to the edited image 711, and second metadata 122-2 storing information to be used to restore the original image.

For example, the electronic device may identify the portion 721 of the edited image 711, changed from the original image, using the first metadata 122-1. For example, the first metadata 122-1 may include data representing a position, shape, and/or size of the portion 721 in the edited image 711. Referring to FIG. 7, in an embodiment in which the edited image 711 was generated by changing a facial expression captured by the original image, the electronic device may obtain data representing the portion 721 corresponding to the face in the edited image 711 from the first metadata 122-1.

For example, the electronic device may obtain pixel information 722 for at least a portion of the original image corresponding to the portion 721, using the second metadata 122-2. The pixel information 722 may include a color distribution and/or a brightness distribution of the portion of the original image corresponding to the portion 721. Referring to FIG. 7, in case that the edited image 711 is generated by changing the at least a portion of the original image, the entire original image is not stored in the file 124, but the pixel information 722 corresponding to the portion 721 is stored. Therefore, while the file 124 has a relatively small size, it may further include information for restoring and/or displaying the original image.

For example, information (e.g., pixel information 722) for minimizing or preventing distortion that may occur upon restoring the original image may be stored in the file 124. The pixel information 722 may be based on a resolution and/or size of the original image. For example, the pixel information 722 may include pixels that are matched one-to-one with pixels corresponding to the portion 721 in the original image. For example, the pixel information 722 may represent a color distribution of pixels of the original image corresponding to the portion 721, using a resolution lower than the resolution of the original image or a size smaller than the size of the portion 721 of the original image.

Referring to FIG. 7, in operation 730, according to an embodiment, the processor of the electronic device may generate a partial image corresponding to at least a portion (e.g., portion 721) of the edited image 711, using the pixel information 722 obtained by performing the operation 720. For example, the processor may obtain, from the second metadata 122-2, a partial image for a second portion of the original image corresponding to the portion 721 of the edited image 711. In case that the pixel information 722 represents pixel values (or pixel colors) of the portion of the original image corresponding to the portion 721 of the edited image 711 based on the resolution and/or size of the original image, the pixel information 722 may be used as the partial image of the operation 730.

In an embodiment, the partial image of the operation 730 may have dimensions (e.g., width, height, and/or size) and/or resolution of the portion 721 represented by the first metadata 122-1. The electronic device, having identified the pixel information 722 based on a resolution lower than the resolution of the original image (or the edited image 711) from the second metadata 122-2, may synthesize or generate a partial image having the same resolution as the resolution of the original image (or the edited image 711), by executing an artificial intelligence model (e.g., a high-resolution model) for increasing the resolution of the pixel information 722. An operation of generating the partial image having a relatively high resolution from the pixel information 722 of a relatively low resolution may be referred to as an upscale operation.

Referring to FIG. 7, in operation 740, according to an embodiment, the processor of the electronic device may generate a restored image 741 by combining the generated partial image and the edited image 711. For example, the processor may generate the restored image 741 by replacing the portion 721 of the edited image 711 with the partial image of the operation 730. For example, the processor may generate the restored image 741 by combining, synthesizing, or stitching the edited image 711 and the partial image. For example, the restored image 741 may include the partial image combined at the location of the portion 721 in the edited image 711. For example, in the restored image 741, the edited image 711 may be disposed in a remaining portion different from a portion where the partial image is disposed. The embodiment is not limited thereto, and in case of generating an image of the entire size of the original image using the pixel information 722, the processor may determine the generated image as the restored image 741.

The processor having generated the restored image 741 of the operation 740 may display the restored image 741 on the display (e.g., the display 130 of FIG. 1). The processor, which was displaying the edited image 711 on the display, may change or replace the edited image 711 with the restored image 741 based on operation 740.

As described above, according to an embodiment, the electronic device may directly obtain at least a portion of the original image, which is required to restore the original image, using the pixel information 722 stored in the second metadata 122-2 of the file 124. In an embodiment of FIG. 7, the processor may generate or display the restored image 741 without executing the image restoration model (e.g., the image restoration model 230 of FIG. 2A and/or FIG. 2B).

In an embodiment, the electronic device may detect damage to the pixel information 722 stored in the file 124. For example, in case of detecting the pixel information 722 having a size smaller than the size of the portion 721, indicated by the first metadata 122-1 from the file 124, the electronic device may detect damage to the pixel information 722. The electronic device having detected the damage to the pixel information 722 may execute the image generation model (e.g., the image restoration model 230 of FIG. 2A and/or FIG. 2B) to change at least one pixel of the edited image 711 that does not correspond to the pixel information 722 (e.g., in-painting) or combine at least one pixel that does not correspond to the pixel information 722 with the edited image 711 (e.g., out-painting), thereby generating or obtaining the restored image 741.

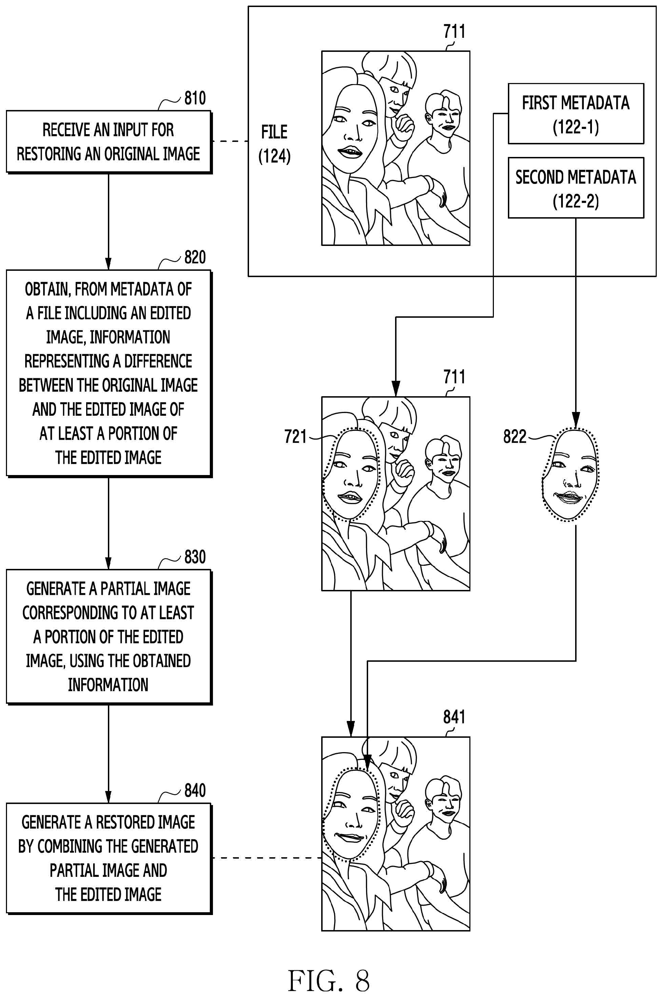

FIG. 8 illustrates an example operation of an electronic device for restoring an original image using pixel differences indicated by metadata (e.g., second metadata 122-2) of a file 124. The electronic device 101 of FIG. 1, FIG. 2A, and FIG. 2B and/or the processor 210 of FIG. 2A and/or FIG. 2B may perform the operations described with reference to FIG. 8. At least one of the operations of FIG. 8 may be related to the operations of FIG. 5 or may be performed similarly. A sequence of the operations in FIG. 8 is of an example only, and in an embodiment, the electronic device may perform the operations of FIG. 8 in a sequence different from that illustrated in FIG. 8. In an embodiment, the electronic device may perform at least two of the operations of FIG. 8 substantially simultaneously.

Referring to FIG. 8, in operation 810, according to an embodiment, the processor of the electronic device may receive an input for restoring an original image. The processor may receive the input of operation 810 while displaying a viewer screen including an edited image 711 (e.g., the state 191 of FIG. 1). For example, the input of operation 810 may include the input of the operation 520 of FIG. 5 and/or the operation 710 of FIG. 7.

Referring to FIG. 8, in operation 820, according to an embodiment, the processor of the electronic device may obtain, from metadata of the file 124 including the edited image 711, information 822 representing a difference between the original image and the edited image 711 for at least a portion (e.g., the portion 721) of the edited image 711. In case that the file 124 including the edited image 711 is generated based on the operations described with reference to FIG. 3, FIG. 4A, and/or FIG. 4B, the file 124 may include information 822 representing a pixel difference (e.g., a pixel-wise color difference and/or a pixel-wise value difference) between the edited image 711 and the original image. The information 822 may be stored in the second metadata 122-2 as information for restoring the original image. The processor may identify the portion 721 on the edited image 711 related to the information 822 from the first metadata 122-1 including history information related to generation of the edited image 711.

Referring to FIG. 8, in a case where the edited image 711 is generated by editing a portion related to a face in the original image, the file 124 may include the first metadata 122-1 representing the portion 721 of the edited image 711 that was changed from the original image. In such a case, the file 124 may include the information 822 including difference values between pixels of the original image and pixels of the edited image 711 corresponding to the portion 721. Since the information 822 included in the second metadata 122-2 stores only the difference values, the entire original image might not be stored to restore the original image, and the capacity of the file 124 may be reduced. Based on the operation 820, the processor having obtained the information 822 representing the pixel difference between the original image and the edited image 711 from the metadata (e.g., second metadata 122-2) may perform operation 830.

Referring to FIG. 8, in operation 830, according to an embodiment, the processor of the electronic device may generate a partial image corresponding to at least a portion of the edited image 711, using the information 822 obtained based on the operation 820. For example, the processor may change colors (or values) of pixels corresponding to the portion 721 in the edited image 711 using the information 822. The colors (or values) of the pixels changed using the information 822 may correspond to the colors (or values) of pixels of the original image represented by the information 822. For example, the processor may generate the partial image by changing the color of at least one pixel of the edited image 711 using the pixel difference represented by the information 822.

Referring to FIG. 8, in operation 840, according to an embodiment, the processor of the electronic device may generate a restored image 841 by combining the partial image generated based on the operation 830 and the edited image 711. For example, the processor may generate the restored image 841 by replacing the portion 721 of the edited image 711 with the partial image of the operation 830. For example, the processor may generate the restored image 841 by combining, synthesizing, or stitching the edited image 711 and the partial image. The processor may display the restored image 841 on the display. The restored image 841 may include the edited image 711 and the partial image of the operation 830 superimposed on the edited image 711.

As described above, using the pixel difference represented by the information 822, the processor may generate the restored image 841 by changing the color of at least one pixel of the edited image 711. In an embodiment of FIG. 8, the processor may generate or display the restored image 841 without executing the image restoration model (e.g., the image restoration model 230 of FIG. 2A and/or FIG. 2B).

Hereinafter, an example operation of an electronic device for executing an image restoration model using a prompt included in metadata (e.g., the second metadata 122-2) is described.

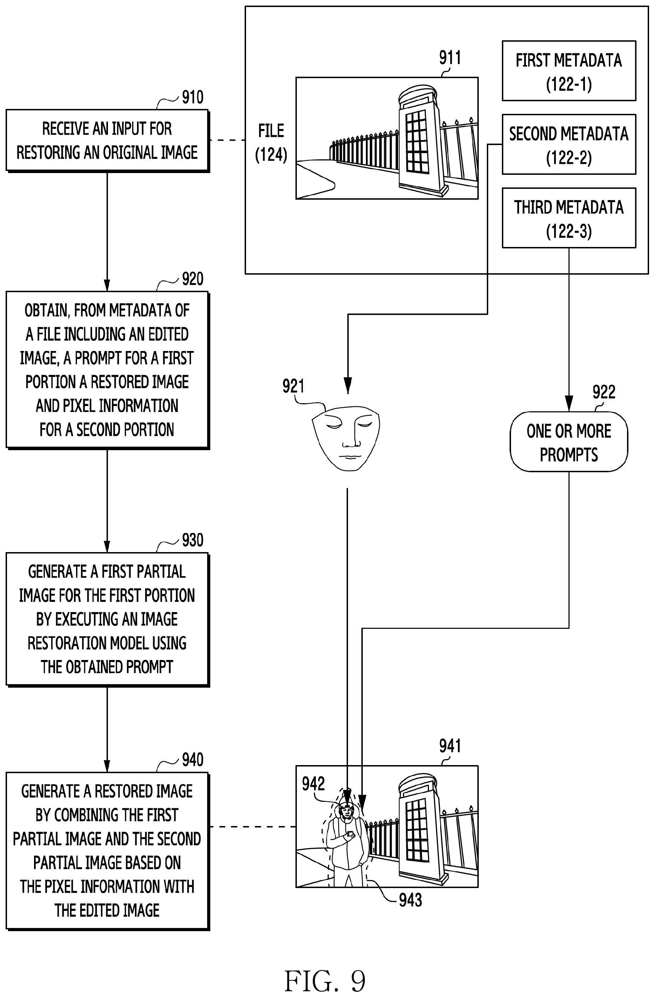

FIG. 9 illustrates an example operation of an electronic device for restoring an original image using pixel information and/or one or more prompts 922 included in metadata of a file 124. The electronic device 101 of FIG. 1, FIG. 2A, and FIG. 2B and/or the processor 210 of FIG. 2A and/or FIG. 2B may perform the operations described with reference to FIG. 9. At least one of the operations of FIG. 9 may be related to the operations of FIG. 5 or may be performed similarly. A sequence of the operations in FIG. 9 is of an example only, and in an embodiment, the electronic device may perform the operations of FIG. 9 in a sequence different from that illustrated in FIG. 9. In an embodiment, the electronic device may perform at least two of the operations of FIG. 9 substantially simultaneously.

Referring to FIG. 9, in operation 910, according to an embodiment, the processor of the electronic device may receive an input for restoring an original image. The processor may receive the input of operation 910 through a viewer screen including an edited image 911 displayed on a display (e.g., the display 130 of FIG. 1). For example, the input of operation 910 may include the input of the operation 520 of FIG. 5, the input of operation 710 of FIG. 7, and the input of the operation 810 of FIG. 8.

Referring to FIG. 9, in operation 920, according to an embodiment, the processor of the electronic device may obtain, from the metadata of the file 124 including the edited image 911, a prompt (e.g., one or more prompts 922) for a first portion 943 of a restored image 941 and pixel information 921 for a second portion 942 thereof. In an embodiment, the file 124 including the edited image 911 may include first metadata 122-1 representing a portion of the edited image 911 changed from the original image.

In an embodiment, the portion of the edited image 911 changed from the original image may be divided into a main area and a sub-area. In an example case where the edited image 911 is generated by changing a portion related to a person in the original image, a portion related to a face of the person (e.g., a portion corresponding to the second portion 942 of the restored image 941) may be classified as the main area, and another portion related to clothes of the person (or a remaining portion except for the face) (e.g., a portion corresponding to the first portion 943 of the restored image 941) may be classified as the sub-area.

For example, there is a high probability that a user viewing the restored image 941 generated by the input of operation 910 will gaze at the restored face, and thus the portion related to the face of the person may be classified as the main area, and other portions different from the main area may be classified as the sub-area. The file 124 including the edited image 911 may include second metadata 122-2 including pixel information 921 corresponding to the main area in the original image. The file 124 may include third metadata 122-3 including one or more prompts 922 describing content expressed in the sub-area in the original image (e.g., clothes of a person, a body shape of a person, etc.). The one or more prompts 922 may include one or more words (e.g., keywords) depicting the content of the sub-area and/or natural language sentences in which the one or more words are combined. Among at least a portion of the edited image 911 changed from the original image, all the pixels corresponding to the sub-area different from the main area are replaced with one or more prompts 922 in the file 124, and therefore, the file 124 may represent the sub-area with a relatively small size.

The processor, having obtained the pixel information 921 of the first portion (e.g., the main area) of the original image and the prompt for the second portion (e.g., the sub-area) from the metadata of the file 124 (e.g., the second metadata 122-2 and/or the third metadata 122-3), may at least partially change the edited image 911 using the pixel information 921 and the prompt.

Referring to FIG. 9, in operation 930, according to an embodiment, the processor of the electronic device may generate a first partial image for the first portion 943 by executing an image restoration model (e.g., the image restoration model 230 of FIG. 2A and/or FIG. 2B) using the prompt (e.g., one or more prompts 922) obtained based on the operation 930. The one or more prompts 922 obtained by the processor from the third metadata 122-3 may include natural language sentences expressing the content of the original image corresponding to the sub-area of the edited image 911 (e.g., "A person is wearing a black backpack. The person is wearing a winter jumper with a brown fur hat attached and black training pants. The person's right arm is bent toward the body, and the person's right hand is located at the chest part. The person is holding a black mobile phone in the right hand. The person's left hand is located inside the pants pocket. The person is wearing a fur hat.").

In an embodiment, the processor may generate the first partial image of the operation 930 by inputting the one or more prompts 922 into the image restoration model. In an embodiment, to process the one or more prompts 922, the image restoration model may have the structure described with reference to FIGS. 6D to 6F. The first partial image obtained using the operation 930 may express the content of the sub-area of the original image. The embodiment is not limited thereto, and the processor may execute the image restoration model using the one or more prompts 922 and the edited image 911 to obtain or generate the edited image 911 to which the first partial image is combined.

Referring to FIG. 9, in operation 940, according to an embodiment, the processor of the electronic device may generate the restored image 941 by combining the first partial image obtained based on the operation 930 and a second partial image based on the pixel information 921 with the edited image 911. The second partial image may include content of the main area of the original image represented by the pixel information 921. The processor may generate the restored image 941 by synthesizing the first partial image corresponding to the first portion 943, generated by executing the image restoration model using the one or more prompts 922, and the second partial image corresponding to the second portion 942, represented by the pixel information 921.

For example, the first partial image and the second partial image may be combined or superimposed on the edited image 911. For example, the first partial image generated based on the operation 930 may be located on the sub-area indicated by the metadata of the file 124 (e.g., the first metadata 122-1 and/or the third metadata 122-3) within the restored image 941. For example, the second partial image represented by the pixel information 921 of the operation 920 may be located on the main area indicated by the metadata of the file 124 (e.g., the first metadata 122-1 and/or the second metadata 122-2) within the restored image 941.

As described above, according to an embodiment, the electronic device may obtain or generate areas of the original image (e.g., the main area and/or the sub-area) that were changed to generate the edited image 911, using the pixel information 921 and/or the one or more prompts 922 stored in the second metadata 122-2 of the file 124.

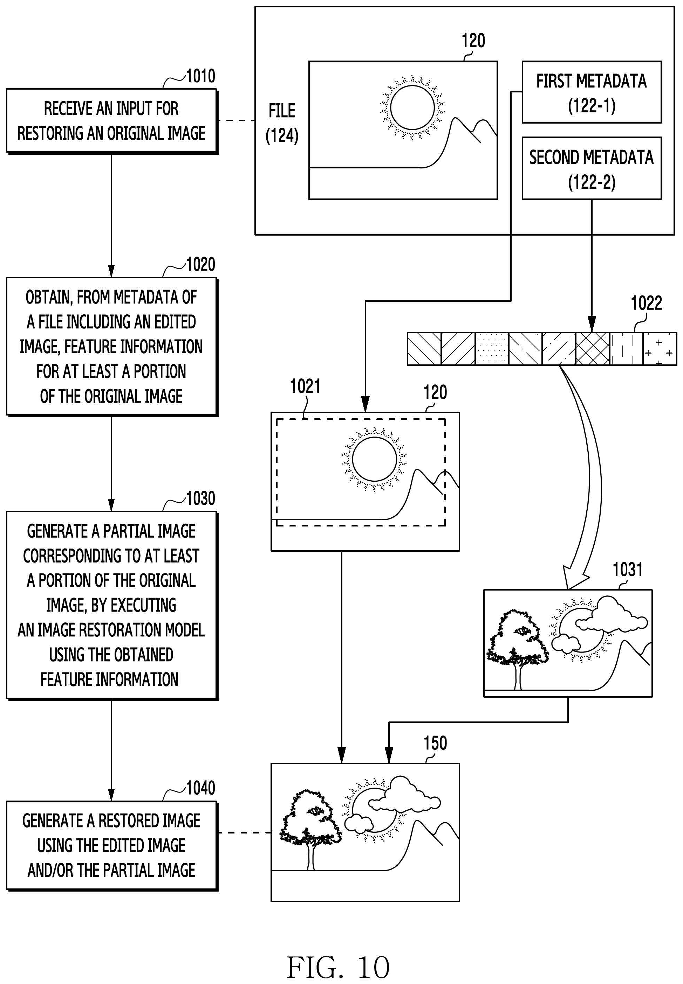

FIG. 10 illustrates an example operation of an electronic device for restoring an original image using feature information 1022 included in metadata of a file 124. The electronic device 101 of FIG. 1, FIG. 2A, and FIG. 2B and/or the processor 210 of FIG. 2A and/or FIG. 2B may perform the operations described with reference to FIG. 10. At least one of the operations of FIG. 10 may be related to the operations of FIG. 5 or may be performed similarly. A sequence of the operations in FIG. 10 is of an example only, and in an embodiment, the electronic device may perform the operations of FIG. 10 in a sequence different from that illustrated in FIG. 10. In an embodiment, the electronic device may perform at least two of the operations of FIG. 10 substantially simultaneously.

Referring to FIG. 10, in operation 1010, according to an embodiment, the processor of the electronic device may receive an input for restoring an original image. In a state of visualizing the file 124 including an edited image 120 corresponding to the original image of operation 1010 (e.g., the state 191 of FIG. 1), the processor may receive the input of the operation 1010. For example, the input of the operation 1010 may include the input of the operation 520 of FIG. 5, the input of the operation 710 of FIG. 7, the input of the operation 810 of FIG. 8, and the input of the operation 910 of FIG. 9.

Referring to FIG. 10, in operation 1020, according to an embodiment, the processor of the electronic device may obtain feature information 1022 for at least a portion of the original image (e.g., a portion of the original image corresponding to a portion 1021) from metadata of the file 124 including the edited image 120. The file 124 including the edited image 120 may include first metadata 122-1 including a change history changed from the original image to the edited image 120 and second metadata 122-2 storing information to be used to restore the original image.

In an embodiment, from the first metadata 122-1, the processor may detect the portion 1021 changed from the original image to generate the edited image 120. From the second metadata 122-2, the processor may obtain the feature information 1022 for the portion of the original image corresponding to the portion 1021. For example, the feature information 1022 may include a latent vector (e.g., the latent vector 624 of FIG. 6B) output from the encoding model 621 of FIG. 6B, into which the original image (or the portion of the original image) was input. Since the file 124 includes the latent vector generated based on dimension reduction, the file 124 may include only the feature information 1022 of a relatively small size and may support restoration of the original image using the feature information 1022.

The feature information 1022 may be compressed information expressing a portion of the original image corresponding to the portion 1021 of the edited image 120. The feature information 1022 may be implicit information capable of being input to the image restoration model (e.g., the decoding model 622 of FIG. 6B). In an embodiment, the processor may obtain, from metadata of the file 124, a feature vector (e.g., the feature information 1022) associated with the original image and data representing at least a portion (e.g., portion 1021) to be replaced by the feature vector in the edited image 120.

Referring to FIG. 10, in operation 1030, according to an embodiment, the processor of the electronic device may generate a partial image 1031 corresponding to at least a portion of the original image, by executing the image restoration model (e.g., the image restoration model 230 of FIG. 2A and/or FIG. 2B) using the feature information 1022 obtained based on the operation 1020. The image restoration model of the operation 1030 may include the decoding model 622 of the autoencoder of FIG. 6B. As described above with reference to FIG. 6B, the decoding model 622 may generate or output an image (e.g., at least a portion of the original image) that was input to the encoding model 621 for generation of the feature information 1022 from the feature information 1022 (e.g., the latent vector).

A pair of the encoding model 621 and the decoding model 622 may be trained such that a difference between an input image of the encoding model 621 and an output image of the decoding model 622 is minimized. For example, the partial image 1031 of the operation 1030, generated using the image restoration model including the decoding model 622, may match or be similar to at least a portion of the original image that was input to the encoding model 621 to generate the feature information 1022.

Referring to FIG. 10, in operation 1040, according to an embodiment, the processor of the electronic device may generate a restored image 150 using the edited image 120 and/or the partial image 1031. For example, the processor may generate the restored image 150 by combining, synthesizing, or stitching the partial image 1031 with the portion 1021 represented by the first metadata 122-1, on the edited image 120. The processor having generated the restored image 140 may display the restored image 140 on the display in response to the input of the operation 1010.

As described above, by executing the image restoration model using the feature vector (e.g., the latent vector) represented by the feature information 1022, the processor may generate or obtain at least a portion of the restored image 150 (e.g., the partial image 1031). In the edited image 120 displayed on the viewer screen, the processor may display the generated at least a portion (e.g., the partial image 1031) on the portion 1021 represented by the first metadata 122-1. Using the file 124 including the feature information 1022 used for execution of the image restoration model based on the autoencoder, the processor may generate the partial image 1031.

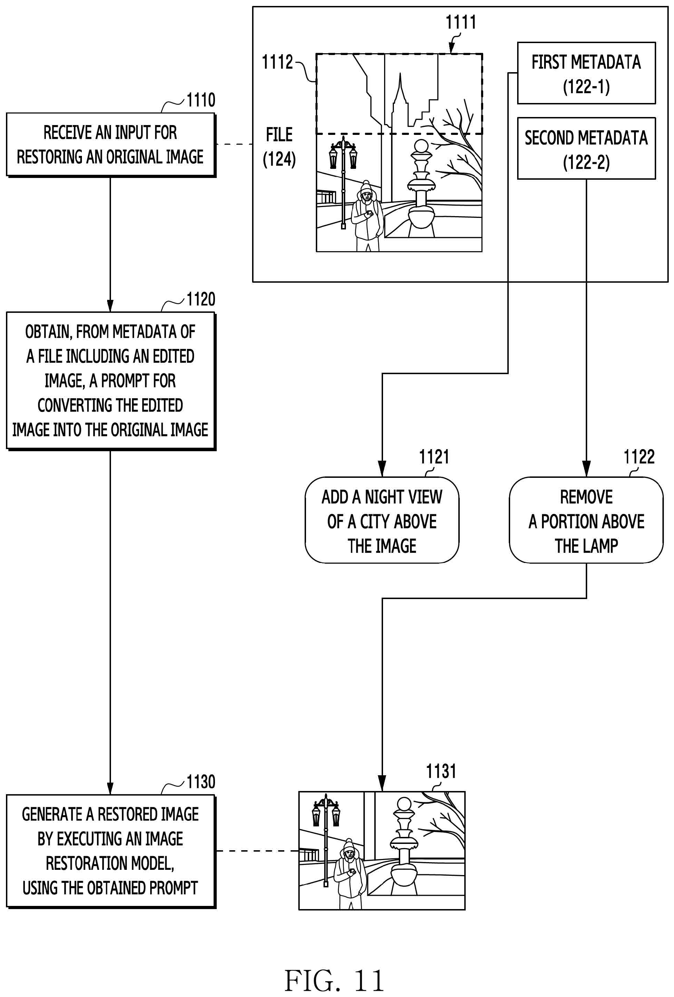

FIG. 11 illustrates an example operation of an electronic device for restoring an original image using one or more prompts included in metadata of a file 124. The electronic device 101 of FIG. 1, FIG. 2A, and FIG. 2B and/or the processor 210 of FIG. 2A and/or FIG. 2B may perform the operations described with reference to FIG. 11. At least one of the operations of FIG. 11 may be related to the operations of FIG. 5 or may be performed similarly. A sequence of the operations in FIG. 11 is of an example only, and in an embodiment, the electronic device may perform the operations of FIG. 11 in a sequence different from that illustrated in FIG. 11. In an embodiment, the electronic device may perform at least two of the operations of FIG. 11 substantially simultaneously.

Referring to FIG. 11, in operation 1110, according to an embodiment, the processor of the electronic device may receive an input for restoring an original image. The processor may receive the input of operation 1110 in a state of displaying an edited image 1111 included in the file 124. The input of operation 1110 may include the input of the operation 520 of FIG. 5, the input of the operation 710 of FIG. 7, the input of the operation 810 of FIG. 8, the input of the operation 910 of FIG. 9, and/or the input of the operation 1010 of FIG. 10.

Referring to FIG. 11, in operation 1120, according to an embodiment, the processor of the electronic device may obtain a prompt (e.g., a second prompt 1122) for converting the edited image into the original image from metadata of the file 124 including the edited image 1111. In an embodiment in which the original image is converted by executing an image editing model (e.g., the image editing model 420 of FIG. 4A), the edited image 1111 converted from the original image and a first prompt 1121 that was used to execute the image editing model may be stored in the file 124. The first prompt 1121 may be stored in the first metadata 122-1 of the file 124.

Referring to FIG. 11, an example of the edited image 1111, changed from an original image including a night view of a city, based on execution of the image editing model, is illustrated. For example, the electronic device, having received the first prompt 1121 (e.g., "Add a night view of a city above the image") for adding content to the original image, may generate or obtain the edited image 1111 further including a portion 1112 by executing the image editing model. In response to an input for storing the edited image 1111, the electronic device may generate the file 124 including the edited image 1111 and the first prompt 1121.

In an embodiment, the electronic device may store information for restoring the original image using the edited image 1111, in the second metadata 122-2 of the file 124. For example, the electronic device may generate or obtain the second prompt 1122 to be used for restoring the original image from a first prompt 1121 by executing an artificial intelligence model for natural language processing. For example, the electronic device may store the second prompt 1122, which represents another editing action opposite to an editing action represented by the first prompt 1121, in the second metadata 122-2 of the file 124.

In an embodiment of FIG. 11, the first prompt 1121 for adding content to the original image may be stored in the first metadata 122-1, and the second prompt 1122 (e.g., "Remove a portion above the lamp") for removing the content from the edited image 1111 may be stored in the second metadata 122-2. In an embodiment, the artificial intelligence model for natural language processing, which is executed to obtain the second prompt 1122, may be trained to generate the second prompt 1122 having a meaning and/or intention opposite to a meaning and/or intention of the first prompt 1121.

As described above, the file 124 may include a first portion (e.g., the first metadata 122-1) in which the first prompt 1121 is stored and a second portion (e.g., the second metadata 122-2) in which the second prompt 1122 is stored, the second prompt 1122 including a word having a meaning opposite to a word included in the first prompt 1121. In response to an input of operation 1110, the processor may search for one or more prompts (e.g., the second prompt 1122) to be used to convert the edited image 1111 to obtain the original image, from the file 124 and/or the metadata (e.g., the second metadata 122-2). The one or more prompts may be obtained from another prompt (e.g., the first prompt 1121) that was used to convert the original image into the edited image 1111.

Referring to FIG. 11, in operation 1130, according to an embodiment, the processor of the electronic device may generate a restored image 1131 by executing the image restoration model (e.g., the image restoration model 230 of FIG. 2A and/or FIG. 2B) using the prompt (e.g., the second prompt 1122) obtained based on the operation 1120. For example, the processor may execute the image restoration model having a structure for processing the second prompt 1122 (e.g., the structure described with reference to FIGS. 6D to 6F). The processor may generate the restored image 1131 from the image restoration model executed using the second prompt 1122 and the edited image 1111.

In an embodiment of FIG. 11 where the example second prompt 1122 is obtained, the processor may obtain the restored image 1131 in which the portion 1112 of the edited image 1111 is removed, by performing the editing action represented by the second prompt 1122. The processor having obtained the restored image 1131 of the operation 1130 may display the restored image 1131 on the display. The restored image 1131 may be displayed as a response to the input of operation 1110.

Although an example operation of the electronic device based on the second prompt 1122 representing removal of the portion 1112 of the edited image 1111 has been described, the embodiment is not limited thereto. For example, in an embodiment where an edited image is generated using a third prompt representing addition of a specific subject, a fourth prompt representing an editing action different from the third prompt (e.g., removal of the specific subject) may be stored in a file including the edited image. The processor may change or remove a portion related to the specific subject in the edited image by executing the image restoration model using the fourth prompt and the edited image.

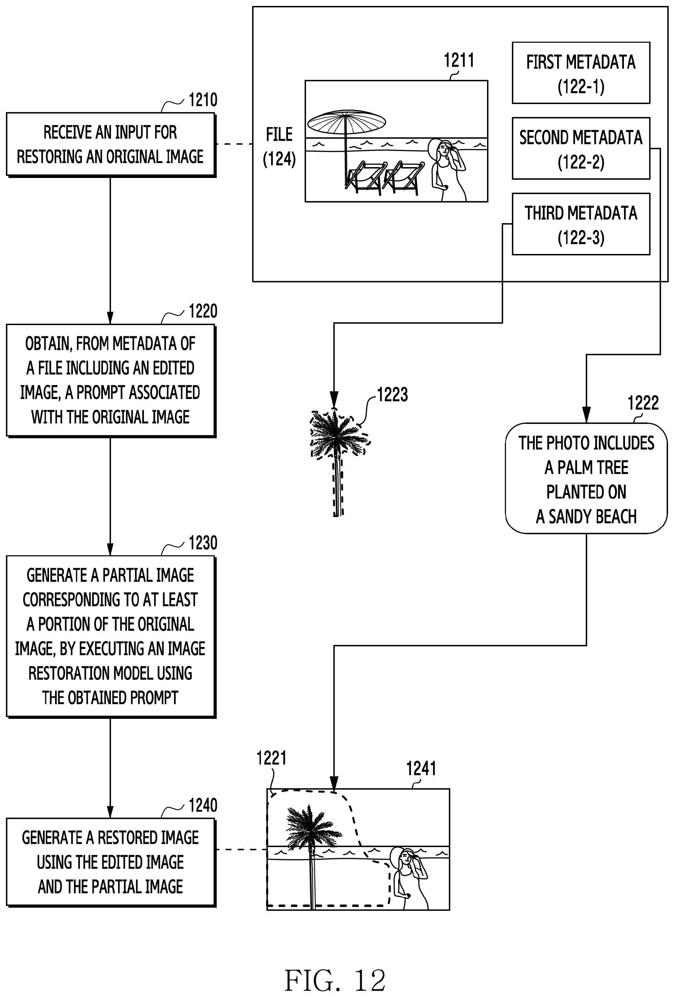

FIG. 12 illustrates an example operation of an electronic device for restoring an original image, using one or more prompts (e.g., a prompt 1222) associated with the original image corresponding to an edited image 1211 of a file 124. The electronic device 101 of FIG. 1, FIG. 2A, and FIG. 2B and/or the processor 210 of FIG. 2A and/or FIG. 2B may perform the operations described with reference to FIG. 12. At least one of the operations of FIG. 12 may be related to the operations of FIG. 5 or may be performed similarly. A sequence of the operations of FIG. 12 is of an example only, and in an embodiment, the electronic device may perform the operations of FIG. 12 in a sequence different from that illustrated in FIG. 12. In an embodiment, the electronic device may perform at least two of the operations of FIG. 12 substantially simultaneously.

Referring to FIG. 12, in operation 1210, according to an embodiment, the processor of the electronic device may receive an input for restoring an original image. Through a viewer screen including the edited image 1211, the processor may receive the input of operation 1210. The input of operation 1210 may include the input of the operation 520 of FIG. 5, the input of the operation 710 of FIG. 7, the input of the operation 810 of FIG. 8, the input of the operation 910 of FIG. 9, the input of the operation 1010 of FIG. 10, and/or the input of the operation 1110 of FIG. 11. In response to the input, the processor may perform other operations of FIG. 12.

Referring to FIG. 12, in operation 1220, according to an embodiment, the processor of the electronic device may obtain a prompt 1222 associated with the original image from metadata of the file 124 including the edited image 1211. The file 124 including the edited image 1211 may include first metadata 122-1 including history information of generating the edited image 1211 from the original image, second metadata 122-2 including the prompt 1222 for restoration of the original image, and third metadata 122-3 representing a boundary line 1223 of a portion of the original image different from the edited image 1211. The third metadata 122-2 may include an image representing the boundary line 1223 (e.g., an edge image).

In an embodiment, the file 124 may include a result of recognizing one or more subjects associated with the original image. The result may include data representing portions of the original image related to the one or more subjects (e.g., data for forming bounding boxes). A bounding box may include information representing a position and/or size in the original image of a portion related to a subject. The result may include an identifier (e.g., an ID and/or a key value) uniquely assigned to the one or more subjects and the data matched to the identifier.

Referring to FIG. 12, the prompt 1222 stored in the second metadata 122-2 may include a natural language sentence (e.g., "The photo includes a palm tree planted on a sandy beach") describing at least a portion of the original image before being changed into the edited image 1211. The prompt 1222 may be generated by executing an artificial intelligence model trained to output one or more natural language sentences representing characteristics of an input image, from the input image. For example, the prompt 1222 may include one or more words, associated with the original image before being changed into the edited image 1211, representing a type, shape, and/or position in the original image of one or more subjects.

Referring to FIG. 12, data (e.g., an edge image) expressing a boundary line 1223 of content (e.g., the tree) of the original image different from the edited image 1211 may be included in third metadata 122-3. The third metadata 122-3 may be stored in the file 124 in order to guide a shape of an AI-generated object to be generated by the artificial intelligence model executed using the prompt 1222 of the second metadata 122-2. Information related to the boundary line 1223 stored in the third metadata 122-3 may be referred to as layout information for an object to be generated by the artificial intelligence model.

Referring to FIG. 12, in operation 1230, according to an embodiment, the processor of the electronic device may generate a partial image corresponding to at least a portion of the original image, by executing the image restoration model (e.g., the image restoration model 230 of FIG. 2A and/or FIG. 2B) using the prompt 1222 obtained based on the operation 1220. The processor may generate the partial image of operation 1230 by executing the image restoration model using the prompt 1222 included in the second metadata 122-2 and the boundary line 1223 represented by the third metadata 122-3. For example, the partial image may have a shape and/or size of the boundary line 1223. For example, the partial image may include content described in the prompt 1222 (e.g., a beach scene having a palm tree).

Referring to FIG. 12, in operation 1240, according to an embodiment, the processor of the electronic device may generate a restored image 1241 using the edited image 1211 and the partial image of the operation 1230. Referring to FIG. 12, the restored image 1241 may be generated by superimposing the partial image of the operation 1230 on the edited image 1211. Referring to FIG. 12, the partial image 1221 included in the restored image 1241 may include pixels representing not only content (e.g., palm tree) of the original image not included in the edited image 1211 having the shape of the boundary line 1223, but also content (e.g., a sandy beach, sea, and sky) to be superimposed on content (e.g., chairs) of the edited image 1211 not included in the original image. The processor may generate the restored image 1241 by replacing at least a portion of the edited image 1211 with the partial image of the operation 1230. The restored image 1241 may be a combination of the edited image 1211 and the partial image generated based on the prompt 1222. The processor may display the restored image 1241 generated based on the operation 1240 on a display.

As described above, a prompt (e.g., the prompt 1222) for content of at least a portion of the original image may be stored in the file 124. The prompt may be used to restore the original image using the edited image 1211 of the file 124. Information stored in the file 124 to restore the original image is not limited to the prompt.

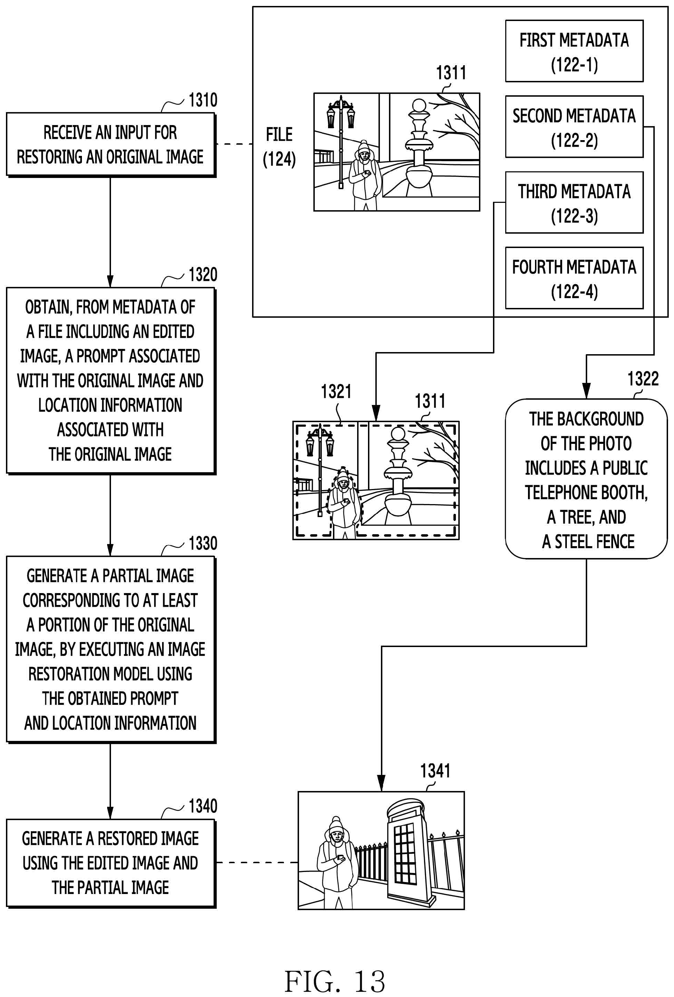

Hereinafter, an example operation of an electronic device for restoring an original image using information collected (or crawled) from a network including the Internet is described with reference to FIG. 13.

FIG. 13 illustrates an example operation of an electronic device for restoring an original image using location information and one or more prompts included in metadata of a file 124. The electronic device 101 of FIG. 1, FIG. 2A, and FIG. 2B and/or the processor 210 of FIG. 2A and/or FIG. 2B may perform the operations described with reference to FIG. 13. At least one of the operations of FIG. 13 may be related to the operations of FIG. 5 or may be performed similarly. A sequence of the operations in FIG. 13 is of an example only, and in an embodiment, the electronic device may perform the operations of FIG. 13 in a sequence different from that illustrated in FIG. 13. In an embodiment, the electronic device may perform at least two of the operations of FIG. 13 substantially simultaneously.

Referring to FIG. 13, in operation 1310, according to an embodiment, the processor of the electronic device may receive an input for restoring an original image. In a viewer screen including an edited image 1311, the processor may display a visual object (e.g., visual objects 141 and 142 of FIG. 1) for receiving an input of operation 1310. The input of operation 1310 may include an input representing selection of the visual object. The input of operation 1310 may include the input of operation 520 of FIG. 5, the input of operation 710 of FIG. 7, the input of operation 810 of FIG. 8, the input of operation 910 of FIG. 9, the input of operation 1010 of FIG. 10, the input of operation 1110 of FIG. 11, and/or the input of operation 1210 of FIG. 12. In response to the input, the processor may perform other operations of FIG. 13.

Referring to FIG. 13, in operation 1320, according to an embodiment, the processor of the electronic device may obtain, from metadata of the file 124 including the edited image 1311, a prompt 1322 associated with the original image and location information associated with the original image. For example, the file 124 may include first metadata 122-1 including history information related to generation of the edited image 1211. For example, the file 124 may include second metadata 122-2 including a prompt 1322 for restoration of the original image. For example, the file 124 may include third metadata 122-3 representing a boundary line of a portion 1321 of the original image different from the edited image 1311. For example, the file 124 may include fourth metadata 122-4 including time and/or location information of the original image captured. The location information may include GPS coordinates.

Referring to FIG. 13, an edited image 1311 including a night view and a person is illustrated as an example. The file 124 may include a prompt 1322 (e.g., "The background of the photo includes a public telephone booth, a tree, and a steel fence") describing content of the original image before being changed to the edited image 1311. The file 124 may include data representing the portion 1321 (e.g., a boundary line of the portion 1321) of the edited image 1311 changed from the original image.

Referring to FIG. 13, in operation 1330, according to an embodiment, the processor of the electronic device may generate a partial image corresponding to at least a portion of an original image, by executing an image restoration model (e.g., the image restoration model 230 of FIG. 2A and/or FIG. 2B) using the prompt 1322 and location information obtained based on the operation 1320. For example, the processor may obtain information about an actual space associated with the original image using the location information represented by the fourth metadata 122-4. The information about the actual space may include an image uploaded to the Internet (e.g., a road view image and/or an image uploaded to a social network service (SNS)). The location information is not limited to GPS coordinates and may include a network address (e.g., a uniform resource locator (URL) and/or a uniform resource indicator (URI)) of the information about the actual space. In an embodiment, the processor may obtain or download the information about the actual space by communicating with a server in which images and/or videos useful for restoring the original image are stored. The information about the actual space obtained from the Internet may include a prompt used to restore the original image using the image of the actual space.

In an embodiment, the processor may obtain the information about the actual space by performing an operation for collecting or obtaining information from a network including the Internet, such as crawling. Using the obtained information, the prompt 1322, information representing the portion 1321, and/or the edited image 1311, the processor may execute the image restoration model of the operation 1330. For example, the image restoration model may be trained to generate, using the image and/or video of the actual space, a partial image including content (e.g., a view of the actual space) removed from the original image to generate the edited image 1311.

Referring to FIG. 13, in operation 1340, according to an embodiment, the processor of the electronic device may generate a restored image 1341 using the edited image 1311 and the partial image of operation 1340. The processor may generate the restored image 1341 by combining, synthesizing, or stitching the partial image generated based on the operation 1330, on the portion 1321 of the edited image 1311. For example, the restored image 1341 may include the partial image expressing content for the actual space obtained from the network and at least a portion of the edited image 1311 (e.g., a remaining portion of the edited image 1311 different from the portion 1321). The processor may display the restored image 1341 generated based on the operation 1340 on the display.

As described above, the file 124 may further include, as information used to restore the original image, not only the prompt 1322 but also other types of information different from the prompt 1322. Hereinafter, an example operation of the electronic device for receiving an input for restoring the original image is described with reference to FIG. 14A and/or FIG. 14B.

FIGS. 14A and 14B illustrate example states 1401, 1402, 1403, 1404, 1405, and 1406 of the electronic device 101 for restoring an original image. The electronic device 101 of FIG. 1, FIG. 2A, and FIG. 2B and/or the processor 210 of FIG. 2A and/or FIG. 2B may perform the operations described with reference to FIGS. 14A and 14B. At least one of the operations of FIG. 14A and/or FIG. 14B may be related to the operations of FIG. 5 and FIGS. 7 to 13.

Referring to FIGS. 14A and 14B, the example states 1401, 1402, 1403, 1404, 1405, and 1406 of the electronic device 101 displaying a viewer screen including an edited image 1411 on a display 130 are illustrated. According to an embodiment, the electronic device 101 may display, on the display 130, a viewer screen including an edited image 1411 corresponding to an original image and a visual object for indicating a difference between the original image and the edited image. Referring to FIG. 14A, in state 1401, the electronic device 101 may display, on the display 130, a viewer screen including the edited image 1411 and an indicator (e.g., indicators 1412 and 1413) corresponding to a visual object area of the edited image 1411 (e.g., a portion of the edited image 1411 changed from the original image).

In an embodiment, from the file (e.g., the file 124 of FIG. 1) including the edited image 1411, the electronic device 101 may obtain information associated with the original image before being changed into the edited image 1411 and/or other edited images of intermediate versions between the original image and the edited image 1411. For example, while a user edits the original image, edited images of a plurality of versions may be generated. The file may include a latest version of the edited image 1411 among the plurality of versions. The file may include information for rolling back to the edited images of the plurality of versions and/or the original image (e.g., the first metadata 122-1 to the fourth metadata 122-4 described with reference to FIGS. 7 to 13). For example, the file may include information for restoring the original image and/or information for restoring the edited images of the plurality of versions.

Referring to FIG. 14A, in the state 1401 of displaying the latest version of the edited image 1411 among the plurality of versions, on the display 130, the electronic device 101 may display an indicator 1413 corresponding to the original image and an indicator 1412 related to another version different from the latest version among the plurality of versions. The indicators 1412 and 1413 may be identified using metadata of the file including the edited image 1411. For example, the electronic device 101 may identify, from the metadata, positions of the indicators 1412 and 1413 on the edited image 1411 and/or forms of the indicators 1412 and 1413 (e.g., text and/or images to be embedded in each of the indicators 1412 and 1413).

Referring to FIG. 14A, an embodiment is illustrated in which, based on an original image representing a view of an empty beach and a person, a first version of edited image with a portion representing a palm tree added and a second version of edited image 1411 with a portion representing a parasol and chairs added were sequentially generated, and a file including the second version of the edited image 1411 is stored. In the state 1401 of displaying the viewer screen including the second version of the edited image 1411, the electronic device 101 may display the indicator 1413 representing restoration to the original image and the indicator 1412 representing restoration to the first version of the edited image. The indicator 1413 may include an image representing the empty beach. The indicator 1412 may include an image representing a subject (e.g., palm tree) that was represented by the first version of the edited image. The indicator 1412 may have a position corresponding to the portion that was added to the first version of the edited image.

In an embodiment, data representing the form and/or position of the indicators 1412 and 1413 may be stored in the first metadata 122-1 described with reference to FIGS. 7 to 13. For example, the first metadata 122-1 may include therein prompts that were used to generate the edited images of each of the plurality of versions, partial images (e.g., a low-resolution partial image and/or an edge image) for portions where each of the edited images is different from the original image, feature information (e.g., the latent vector 624 of FIG. 6B), and/or information about the image editing model that was used to generate the edited images.

In an embodiment, based on an input representing selection of any one of the indicators 1412 and 1413, the electronic device 101 may restore or display the original image or an edited image of any one version of the plurality of versions (e.g., another version of edited image different from the edited image 1411). For example, based on an input representing selection of the indicator 1412 corresponding to the first version of the edited image, the electronic device 101 may restore the first version of the edited image.

In an embodiment, the electronic device 101, having generated a restored image 1431 corresponding to the first version of the edited image, may switch from the state 1401 to the state 1403. In the state 1403, the electronic device 101 may display the restored image 1431 on the display 130. For example, together with the restored image 1431, the electronic device 101 may display the indicator 1413 for restoration to the original image. In the state 1403 of displaying the restored image 1431 corresponding to a version different from the latest version of the edited image 1411, the electronic device 101 may display, on the display 130, a visual object 144 for saving the restored image 1431 and a visual object 143 for stopping displaying of the restored image 1431. In response to an input related to the visual object 144, the electronic device 101 may generate or save a file including the restored image 1431. The file may include the restored image 1431 and information for restoring the original image.

In an embodiment, the electronic device 101, having received the input related to the indicator 1413, may generate, based on the input, a partial image representing at least a portion of the original image using an artificial intelligence model such that at least a portion of the edited image 1411 (e.g., a visual object area representing a parasol and chairs) is replaced with at least a portion of the original image having a position corresponding to the position in the edited image 1411 of the at least a portion. By changing at least a portion of the edited image 1411 using the generated partial image, the electronic device 101 may generate a restored image 1421 corresponding to the original image. An operation of the electronic device 101 generating any one of the restored images 1421 and 1431 may be performed similarly to the operation of the electronic device described with reference to FIGS. 5 to 13.

Referring to FIG. 14A, the electronic device 101 having generated the restored image 1421 may switch from the state 1401 to the state 1402. In the state 1402, the electronic device 101 may display the restored image 1421 on the display 130. In the state 1402 of displaying the restored image 1421, the electronic device 101 may display a visual object 144 for generating and/or saving a file including the restored image 1421 displayed on the display 130. In the state 1402, the electronic device 101 may display a visual object 143 for stopping the operation related to the restored image 1421 displayed on the display 130. For example, in response to an input related to the visual object 144, the electronic device 101 may generate or save the file including the restored image 1421. For example, the electronic device 101, having received an input related to the visual object 143, may switch to the state 1401 prior to the state 1402.

Although an example operation of the electronic device 101 for overlappingly displaying, on the edited image 1411, the indicators 1412 and 1413 representing portions of the latest version of the edited image 1411 changed from the original image (or a version of the edited image prior to the latest version) has been described, the embodiment is not limited thereto.

Referring to FIG. 14B, an example state 1404 of the electronic device 101 displaying the latest version of the edited image 1411 along with a slider 1441 having a linear shape is illustrated. The electronic device 101 may display, on the display 130, the slider 1441 and an indicator 1442 aligned with any one marker (or point) of the slider 1441. The slider 1441 may include a marker corresponding to the latest version of the edited image 1411 (e.g., a marker labeled with the number 2), a marker corresponding to a version prior to the latest version (e.g., a marker labeled with the number 1), and a marker corresponding to the original image (e.g., a marker labeled with the number 0). In the state 1404 of displaying the latest version of the edited image 1411, the indicator 1442 may be aligned with the marker corresponding to the latest version on the slider 1441.

For example, as the number of versions of the edited image 1411 increases, the number of markers labeled on the slider 1441 may increase. For example, the electronic device 101 may display, on the slider 1441, markers corresponding to each of the original image and versions of the edited image 1411. Although an embodiment of visualizing the versions of the edited image 1411 using numbers is illustrated, the embodiment is not limited thereto.

In the state 1404 of FIG. 14B, an input for moving the indicator 1442 from any one marker of the slider 1441 to another marker may be received. For example, in the state 1404 of FIG. 14B, the electronic device 101, having received an input for moving the indicator 1442 toward the marker labeled with the number 1, may switch to state 1405 to restore an edited image of a version corresponding to the marker. In the state 1405, the electronic device 101 may display a restored image 1431 corresponding to the first version of the edited image on the display 130. In the state 1405, the indicator 1442 may be aligned with the marker labeled with the number 1. In the state 1405, the electronic device 101 may display a visual object 144 for saving the restored image 1431 displayed on the display 130 and a visual object 143 for stopping generating and/or editing of the restored image 1431.

For example, in the state 1404 of FIG. 14B, the electronic device 101, having received an input for moving the indicator 1442 toward the marker labeled with the number 0, may switch to state 1406 to display a restored image 1421 corresponding to the original image. In the state 1406, the indicator 1442 may be aligned with the marker labeled with the number 0. In the state 1406, the electronic device 101 may display a visual object 144 for saving the restored image 1421 displayed on the display 130 and a visual object 143 for stopping generating and/or editing of the restored image 1421.

Although an operation of the electronic device 101 switching from the state 1404 to another state (e.g., the states 1405 and 1406) has been described, the embodiment is not limited thereto. For example, in the state 1405, in response to an input for moving the indicator 1442, the electronic device 101 may switch from the state 1405 to other state (e.g., the states 1404 and 1406). For example, in the state 1406, in response to an input for moving the indicator 1442, the electronic device 101 may switch from the state 1406 to the other state (e.g., the states 1404 and 1405).

Although an example operation of the electronic device 101 for restoring an intermediate version of edited image and/or the original image based on the slider 1441 and/or the indicator (e.g., the indicators 1412 and 1413) has been described, the embodiment is not limited thereto. For example, the electronic device 101 may display, along with the edited image 1411, a thumbnail image (e.g., an image having a size and/or resolution less than that of the edited image 1411) representing another edited image of a version prior to the edited image 1411 and/or the original image. The thumbnail image may be generated or obtained using an artificial intelligence model (e.g., an image restoration model executed on-device) executed based on metadata of the file including the edited image 1411 (e.g., the first metadata 122-1 to the fourth metadata 122-4 described with reference to FIGS. 5 to 13).

In an embodiment of displaying one or more thumbnail images along with the latest version of the edited image 1411, in response to an input related to the thumbnail image, the electronic device 101 may execute a function for restoring an edited image and/or an original image corresponding to the thumbnail image. The function may be executed using an image restoration model executed in a server (e.g., the external electronic device 250 of FIG. 2B) connected to the electronic device 101. Although an embodiment in which the image restoration models of each of the electronic device 101 and the server are selectively executed has been described, the disclosure is not limited thereto.

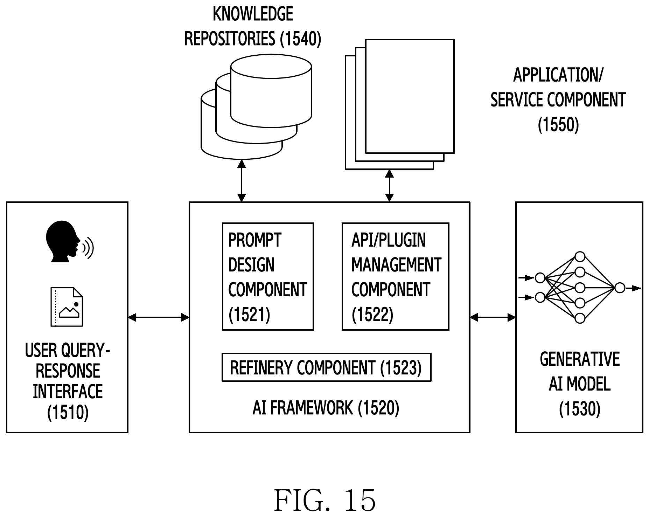

As described above, according to an embodiment, the electronic device 101 may, after deleting an original image, generate or output a restored image 1421 corresponding to the original image, using an edited image 1411 corresponding to the original image and metadata related to the edited image 1411. Hereinafter, one or more programs installed in the electronic device 101 to execute a generative artificial intelligence model, such as an image restoration model, will be described by way of example with reference to FIG. 15.

FIG. 15 illustrates example programs executed by an electronic device to simulate a generative artificial intelligence (AI) model 1530. Referring to FIG. 15, a generative AI system is illustrated. A processor (e.g., the processor 210 of FIG. 2A and/or FIG. 2B) of an electronic device (e.g., the electronic device 101 of FIG. 1) according to an embodiment may execute one or more programs distinguished by blocks in FIG. 15 to execute functions related to the generative artificial intelligence model 1530.

A user query-response interface 1510, executed by an electronic device according to an embodiment, may be executed by the electronic device to receive a user input. The input may include a non-verbal gesture (e.g., a touch input on a display of the electronic device), natural language sentences such as a prompt, an image, a video, or a combination thereof. The electronic device having executed the user query-response interface 1510 may obtain context information at a timing of receiving the input. The context information may include various types of information at the timing, such as, for example, a state of a program (or software application) being executed by the electronic device. The context information may include, for example, location information of the electronic device and/or the user.

The electronic device having executed the user query-response interface 1510 may output information generated by the generative artificial intelligence model 1530 in response to the input. The information may be output in the form of a natural language sentence. The information may be output in the form of a UI displayed on a display. The information generated by the generative artificial intelligence model 1530 may be output in a format selected by the user.

An AI framework 1520 may be a program for executing or controlling components (e.g., a prompt design component 1521, an application programming interface (API)/plugin management component 1522, and/or a refinery component 1523), based on an input received via the user query-response interface 1510. The input detected by executing the user query-response interface 1510 may be processed by the prompt design component 1521. The electronic device having executed the prompt design component 1521 may generate one or more prompts to be input from the input to a generative artificial intelligence model 1530, such as a large language model (LLM). The prompt design component 1521 may include an artificial intelligence model capable of being trained to generate an improved prompt.

The electronic device having executed the prompt design component 1521 may access knowledge repositories 1540 to obtain information for generating a prompt. The information for generating a prompt may include data on preferences of a user of the electronic device, a prompt library, and/or exemplary prompts. One or more prompts generated based on the execution of the prompt design component 1521 may be used for the execution of the generative artificial intelligence model 1530.

The electronic device having executed the API/plugin management component 1522 may execute a function for obtaining information additionally required for the execution of the generative artificial intelligence model 1530, when executing the generative artificial intelligence model 1530 based on a user input. An API provided by the API/plugin management component 1522 may be used to establish a communication link (e.g., channel and/or session) between the generative artificial intelligence model 1530 and another software application. Through the communication link, information additionally required for the execution of the generative artificial intelligence model 1530 may be provided to the generative artificial intelligence model 1530.

The electronic device having executed the API/plugin management component 1522 may trigger an action that should be performed in an application/service component 1550 (e.g., a program and/or a software application installed in the electronic device), using the API provided by the API/plugin management component 1522. Information obtained by executing the application/service component 1550 may be used for generating a prompt based on the execution of the prompt design component 1521 and/or may be input to the generative artificial intelligence model 1530.

A refinery component 1523 (or an output modification component) may change, modulate, or tune output data of the generative artificial intelligence model 1530. The electronic device having executed the refinery component 1523 may detect +relevance, bias, appropriateness, or hallucination of the output data of the generative artificial intelligence model 1530. The electronic device having executed the refinery component 1523 may determine whether to re-execute the generative artificial intelligence model 1530 based on the detected relevance, bias, appropriateness, and/or hallucination. The electronic device having executed the refinery component 1523 may display a hint (e.g., an image and/or text) for reducing or preventing output data unintended by the user.

The generative artificial intelligence model 1530 may refer to an artificial intelligence model that generates new information and/or data based on a user input. The generative artificial intelligence model 1530 may include an artificial intelligence model that generates an image and/or natural language. An artificial intelligence model that generates an image may include a generative adversarial network (GAN), a variational autoencoder (VAE), and/or a diffusion model based on a transformer. An artificial intelligence model that generates natural language is a model trained to output statistically appropriate natural language, and may include CHAT-GPT 3 and/or CHAT-GPT 4. The embodiment is not limited thereto, and the generative artificial intelligence model 1530 may include a large multimodal model (LMM) that receives various types of input data including text, images, and/or audio signals and then generates output data related to the input data.

FIG. 16 is a block diagram of an electronic device in a network environment 1600 according to various embodiments. Referring to FIG. 16, the electronic device 101 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In an embodiment, at least one of the components (e.g., the connecting terminal 1678) may be omitted from the electronic device 1601, or one or more other components may be added in the electronic device 1601. In an embodiment, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may, for example, control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but the disclosure is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or an external electronic device (e.g., the electronic device 1602)(e.g., speaker or headphone) directly or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly or wirelessly. According to an embodiment, the interface 1677 may include, for example, a high definition multimedia interface (HDMI), a universal serial bus (USB) interface, a secure digital (SD) card interface, or an audio interface.

The connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, a SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra-low-latency services using, e.g., distributed computing or mobile edge computing. In an embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. In an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect e.g., importance or order. In a case where an element (e.g., a first element) is referred to, with or without the term "operatively" or "communicatively", as "coupled" or "connected" to/with another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', 'portion', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 1640) including one or more instructions that are stored in a storage medium (e.g., an internal memory 1636 or an external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory CD-ROM), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory 1630 of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 1601 of FIG. 16 may be an example of the electronic device 101 of FIG. 1, FIG. 2A, and/or FIG. 2B.

In an embodiment, a method for restoring an original image using a file including an edited image among the edited image and the original image corresponding to the edited image may be required. In an embodiment, a method for restoring the original image from the edited image of the file using an artificial intelligence model may be required. As described above, according to an embodiment, an electronic device (e.g., the electronic device 101 of FIG. 1 and/or the electronic device 1601 of FIG. 16) may include a display (e.g., the display 130 of FIG. 1), at least one processor including processing circuitry (e.g., the processor 210 of FIG. 2A and/or FIG. 2B), and memory including one or more storage media storing instructions (e.g., the memory 215 of FIG. 2A and/or FIG. 2B). The instructions, when executed individually or collectively by the at least one processor, may cause the electronic device to display, via the display, an edited image including a modified object and a visual object with respect to the modified object. The instructions, when executed individually or collectively by the at least one processor, may cause the electronic device to receive a user input with respect to the visual object while displaying the edited image. The instructions, when executed individually or collectively by the at least one processor, may cause the electronic device to obtain information to replace the modified object with an artificial intelligence (AI)-generated object from metadata corresponding to the edited image, based on the user input. The instructions, when executed individually or collectively by the at least one processor, may cause the electronic device to generate an AI-generated image by executing the artificial intelligence model using the edited image and the information. The instructions, when executed individually or collectively by the at least one processor, may cause the electronic device to display, via the display, the AI-generated image in response to the user input.

For example, the edited image may be generated via the artificial intelligence model such that an object included in an original image is replaced with the modified object, and the information may include one or more prompts describing the object or the original image.

For example, the information may include one or more other prompts that were used to convert the original image to the edited image.

For example, the information may include a feature vector associated with the original image and data representing at least a portion within the edited image to be replaced by the feature vector.

For example, the instructions, when executed individually or collectively by the at least one processor, may cause the electronic device to generate the AI-generated image by executing the artificial intelligence model using the feature vector, as at least a portion of the generation of the AI-generated image. The instructions, when executed individually or collectively by the at least one processor, may cause the electronic device to display, in the edited image, an indicator representing the generated portion on the at least a portion represented by the metadata.

For example, the instructions, when executed individually or collectively by the at least one processor, may cause the electronic device to obtain, from the metadata, pixel information of a first portion of the original image and a prompt for a second portion different from the first portion. The instructions, when executed individually or collectively by the at least one processor, may cause the electronic device to generate, by executing the artificial intelligence model, the AI-generated image, by synthesizing another object generated using pixel information corresponding to the first portion and a portion generated using a prompt corresponding to the second portion.

For example, the instructions, when executed individually or collectively by the at least one processor, may cause the electronic device to obtain information corresponding to a pixel difference between the original image and the edited image from the metadata. The instructions, when executed individually or collectively by the at least one processor, may cause the electronic device to generate, by executing the artificial intelligence model, the AI-generated image, by changing a color of at least one pixel of the edited image using the information.

For example, the instructions, when executed individually or collectively by the at least one processor, may cause the electronic device to obtain a partial image with respect to a portion of the original image corresponding to the modified object of the edited image, from the metadata. The instructions, when executed individually or collectively by the at least one processor, may cause the electronic device to generate, by executing the artificial intelligence model, the AI-generated image using the partial image and the edited image such that the modified image is replaced with the partial image.

For example, the instructions, when executed individually or collectively by the at least one processor, may cause the electronic device to display, via the display, the visual object representing the modified object changed from the original image on at least a portion of the edited image.

For example, the instructions, when executed individually or collectively by the at least one processor, may cause the electronic device to display, based on displaying a latest version of the edited image among a plurality of versions on the display, a plurality of indicators including an indicator corresponding to the original image and other indicators representing each of the plurality of versions. The instructions, when executed individually or collectively by the at least one processor, may cause the electronic device to generate, based on another user input for selecting one indicator among the plurality of indicators, another AI-generated image by executing the artificial intelligence model using the edited image and other information corresponding to the selected indicator. The instructions, when executed individually or collectively by the at least one processor, may cause the electronic device to display, via the display, the other AI-generated image.

As described above, in an embodiment, a method of an electronic device including a display may be provided. The method may include displaying, via the display, an edited image including a modified object and a visual object with respect to the modified object. The method may include receiving a user input with respect to the visual object while displaying the edited image. The method may include, based on the user input, obtaining, from metadata corresponding to the edited image, information to replace the modified object with an artificial intelligence (AI)-generated object. The method may include generating an AI-generated image by executing the artificial intelligence model using the edited image and the information. The method may include displaying, via the display, the AI-generated image in response to the user input.

For example, the edited image may be generated via the artificial intelligence model such that an object included in an original image is replaced with the modified object, and the information may include one or more prompts describing the object or the original image.

For example, the information may include one or more other prompts that were used to convert the original image into the edited image.

For example, the information may include a feature vector associated with the original image and data representing at least a portion within the edited image to be replaced by the feature vector.

For example, the generating may include generating the AI-generated image by executing the artificial intelligence model using the feature vector. The displaying the restored image may include displaying, in the edited image, an indicator representing the generated portion on the at least a portion represented by the metadata.

For example, the obtaining the information may include obtaining, from the metadata, pixel information of a first portion of the original image and a prompt with respect to a second portion different from the first portion. The generating may include generating, by executing the artificial intelligence model, the AI-generated image, by synthesizing another object generated using pixel information corresponding to the first portion and a portion generated using a prompt corresponding to the second portion.

For example, the obtaining the information may include obtaining information corresponding to a pixel difference between the original image and the edited image, from the metadata. The generating may include generating, by executing the artificial intelligence model, the AI-generated image, by changing a color of at least one pixel of the edited image using the information.

For example, the generating may include obtaining a partial image with respect to a portion of the original image corresponding to the modified object of the edited image, from the metadata. The generating may include generating, by executing the artificial intelligence model, the AI-generated image using the partial image and the edited image such that the modified image is replaced with the partial image.

For example, the displaying the restored image may include displaying, via the display, the visual object representing the modified object changed from the original image on at least a portion of the edited image.

As described above, in an embodiment, a non-transitory computer-readable storage medium including instructions may be provided. The instructions, when executed by an electronic device including a display, may cause the electronic device to display, via the display, an edited image including a modified object and a visual object with respect to the modified object. The instructions, when executed by the electronic device, may cause the electronic device to receive a user input with respect to the visual object while displaying the edited image. The instructions, when executed by the electronic device, may cause the electronic device to, based on the user input, obtain, from metadata corresponding to the edited image, information to replace the modified object with an artificial intelligence (AI)-generated object. The instructions, when executed by the electronic device, may cause the electronic device to generate an AI-generated image by executing the artificial intelligence model using the edited image and the information. The instructions, when executed by the electronic device, may cause the electronic device to display, via the display, the AI-generated image in response to the user input.

According to an embodiment, an electronic device may include a display, at least one processor including processing circuitry, and memory including one or more storage media storing instructions. The instructions, when executed individually or collectively by the at least one processor, may cause the electronic device to display, on the display, a viewer screen including an edited image (e.g., the edited image 120 of FIG. 1) corresponding to an original image (e.g., the original image 110 of FIG. 1) and a visual object (e.g., the visual objects 141 and 142 of FIG. 1) for representing a difference between the original image and the edited image. The instructions, when executed individually or collectively by the at least one processor, may cause the electronic device to receive an input associated with the visual object while displaying the viewer screen. The instructions, when executed individually or collectively by the at least one processor, may cause the electronic device to obtain, from metadata (e.g., the metadata 122 of FIG. 1) of a file (e.g., the file 124 of FIG. 1) including the edited image, information used to restore the original image using an artificial intelligence model, based on the input. The instructions, when executed individually or collectively by the at least one processor, may cause the electronic device to generate a restored image (e.g., the restored image 150 of FIG. 1) by executing the artificial intelligence model using the edited image and the information. The instructions, when executed individually or collectively by the at least one processor, may cause the electronic device to display the restored image on the display in response to the input. According to an embodiment, the electronic device may restore the original image corresponding to the edited image using the file including the edited image. According to an embodiment, the electronic device may restore the original image from the edited image of the file using the artificial intelligence model.

For example, the instructions, when executed individually or collectively by the at least one processor, may cause the electronic device to obtain the information including one or more prompts (e.g., the prompt 1222 of FIG. 12) describing the original image, from the metadata.

For example, the one or more prompts may include sentences describing at least a portion of the original image before being changed to the edited image.

For example, the instructions, when executed individually or collectively by the at least one processor, may cause the electronic device to search for one or more prompts (e.g., the prompt 1122 of FIG. 11) to be used to convert the edited image to obtain the original image, from the metadata. The one or more prompts stored in the metadata may be obtained from other prompts (e.g., the prompt 1121 of FIG. 11) that were used to convert the original image to the edited image.

For example, the metadata may include a first portion in which the other prompts are stored and a second portion, in which the one or more prompts are stored, including a word having a meaning opposite to a word included in the other prompts.

For example, the instructions, when executed individually or collectively by the at least one processor, may cause the electronic device to obtain, from the metadata, the information including a feature vector associated with the original image and data representing at least a portion to be replaced by the feature vector in the edited image.

For example, the instructions, when executed individually or collectively by the at least one processor, may cause the electronic device to generate a portion of the restored image by executing the artificial intelligence model using the feature vector. The instructions, when executed individually or collectively by the at least one processor, may cause the electronic device to display the generated portion on the at least a portion represented by the metadata in the edited image displayed on the viewer screen.

For example, the instructions, when executed individually or collectively by the at least one processor, may cause the electronic device to obtain, from the metadata, pixel information of a first portion of the original image (e.g., the information 921 of FIG. 9) and a prompt for a second portion different from the first portion (e.g., one or more prompts 922 of FIG. 9). The instructions, when executed individually or collectively by the at least one processor, may cause the electronic device to generate the restored image by synthesizing the second portion generated by executing the artificial intelligence model using the prompt and the first portion represented by the pixel information.

For example, the instructions, when executed individually or collectively by the at least one processor, may cause the electronic device to obtain information (e.g., the information 822 of FIG. 8) representing a pixel difference between the original image and the edited image from the metadata. The instructions, when executed individually or collectively by the at least one processor, may cause the electronic device to generate the restored image by changing a color of at least one pixel of the edited image using the pixel difference.

For example, the instructions, when executed individually or collectively by the at least one processor, may cause the electronic device to obtain a partial image (e.g., the partial image 1031 of FIG. 10) for a second portion of the original image, corresponding to a first portion of the edited image from the metadata. The instructions, when executed individually or collectively by the at least one processor, may cause the electronic device to generate the restored image by replacing the first portion of the edited image (e.g., the portion 1021 of FIG. 10) with the partial image.

For example, the instructions, when executed individually or collectively by the at least one processor, may cause the electronic device to display the visual object representing a portion of the edited image changed from the original image overlappingly on the portion on the viewer screen.

For example, the instructions, when executed individually or collectively by the at least one processor, may cause the electronic device to display a plurality of indicators (e.g., the indicators 1412 and 1413 of FIG. 14A) including an indicator corresponding to the original image and other indicators representing each of a plurality of versions, based on displaying the latest version of the edited image among the plurality of versions on the display. The instructions, when executed individually or collectively by the at least one processor, may cause the electronic device to display the restored image corresponding to the original image or an edited image of any one version among the plurality of versions, based on the input representing selection of one indicator among the plurality of indicators.

As described above, in an embodiment, a method of an electronic device including a display may be provided. The method may include displaying, on the display, a viewer screen including an edited image corresponding to an original image and a visual object for representing a difference between the original image and the edited image (e.g., operation 510 of FIG. 5). The method may include receiving an input related to the visual object while displaying the viewer screen (e.g., operation 520 of FIG. 5). The method may include obtaining, from metadata of a file including the edited image, information used to restore the original image using an artificial intelligence model, based on the input. The method may include generating a restored image by executing the artificial intelligence model using the edited image and the information (e.g., operation 540 of FIG. 5). The method may include displaying the restored image on the display in response to the input (e.g., operation 550 of FIG. 5).

For example, the obtaining may include obtaining the information including one or more prompts describing the original image from the metadata.

For example, the one or more prompts may include sentences describing at least a portion of the edited image before being changed from the original image.

For example, the obtaining may include searching, from the metadata, for one or more prompts to be used to convert the edited image to obtain the original image. The one or more prompts stored in the metadata may be obtained from other prompts that were used to convert the original image into the edited image.

For example, the metadata may include a first portion in which the other prompts are stored and a second portion in which the one or more prompts are stored, including a word having a meaning opposite to a word included in the other prompts.

For example, the obtaining may include obtaining, from the metadata, the information including a feature vector associated with the original image and data representing at least a portion in the edited image to be replaced by the feature vector.

For example, the generating may include generating a portion of the restored image by executing the artificial intelligence model using the feature vector. The displaying the restored image may include displaying the generated portion on the at least a portion represented by the metadata, in the edited image displayed on the viewer screen.

For example, the obtaining the information may include obtaining, from the metadata, pixel information of a first portion of the original image and a prompt for a second portion different from the first portion. The generating may include generating the restored image by synthesizing the second portion generated by executing the artificial intelligence model using the prompt and the first portion represented by the pixel information.

For example, the obtaining the information may include obtaining information representing a pixel difference between the original image and the edited image, from the metadata. The generating may include generating the restored image by changing a color of at least one pixel of the edited image using the pixel difference.

For example, the generating may include obtaining a partial image for a second portion of the original image corresponding to a first portion of the edited image from the metadata. The generating may include generating the restored image by replacing the first portion of the edited image with the partial image.

For example, the displaying the restored image may include displaying the visual object representing a portion of the edited image changed from the original image overlappingly on the portion on the viewer screen.

For example, the displaying the viewer screen may include displaying a plurality of indicators including an indicator corresponding to the original image and other indicators representing each of a plurality of versions, based on displaying the latest version of the edited image among the plurality of versions on the display. The displaying the viewer screen may include displaying the restored image corresponding to the original image or an edited image of any one version among the plurality of versions, based on an input representing selection of one indicator among the plurality of indicators.

As described above, in an embodiment, a non-transitory computer-readable storage medium including instructions may be provided. The instructions, when executed by an electronic device including a display, may cause the electronic device to display, on the display, a viewer screen including an edited image corresponding to an original image and a visual object for representing a difference between the original image and the edited image. The instructions, when executed by the electronic device, may cause the electronic device to receive an input associated with the visual object while displaying the viewer screen. The instructions, when executed by the electronic device, may cause the electronic device to obtain, from metadata of a file including the edited image, information used to restore the original image using an artificial intelligence model, based on the input. The instructions, when executed by the electronic device, may cause the electronic device to generate a restored image by executing the artificial intelligence model using the edited image and the information. The instructions, when executed by the electronic device, may cause the electronic device to display the restored image on the display in response to the input.

As described above, in an embodiment, a non-transitory computer-readable storage medium including instructions may be provided. The instructions, when executed by an electronic device including a display, may cause the electronic device to display, on the display, a viewer screen including an edited image corresponding to an original image and an indicator corresponding to a first visual object area of the edited image. The instructions, when executed by the electronic device, may cause the electronic device to receive an input associated with the indicator while displaying the viewer screen. The instructions, when executed by the electronic device, may cause the electronic device to generate a second visual object area using an artificial intelligence model such that the first visual object area in the edited image is replaced with the second visual object area of the original image having a position corresponding to the position of the first visual object area in the edited image, based on the input.

For example, the instructions, when executed by the electronic device, may cause the electronic device to obtain, from metadata of a file including the edited image, information used to restore the original image using the artificial intelligence model. The instructions, when executed by the electronic device, may cause the electronic device to generate the second visual object area by executing the artificial intelligence model using at least one of the edited image or information.

For example, the instructions, when executed by the electronic device, may cause the electronic device to obtain, from the metadata, the information including one or more prompts describing the original image.

For example, the one or more prompts may include sentences describing at least a portion of the original image before being changed into the edited image.

For example, the instructions, when executed by the electronic device, may cause the electronic device to search, from the metadata, for one or more prompts to be used to convert the edited image to obtain the original image. The one or more prompts stored in the metadata may be obtained from other prompts that were used to convert the original image into the edited image.

For example, the metadata may include a first portion in which the other prompts are stored and a second portion in which the one or more prompts are stored, including a word having a meaning opposite to a word included in the other prompts.

As described above, according to an embodiment, an electronic device (e.g., the electronic device 101 of FIG. 1 and/or the electronic device 1601 of FIG. 16) may include a display (e.g., the display 130 of FIG. 1), at least one processor including processing circuitry (e.g., the processor 210 of FIG. 2A and/or FIG. 2B), and memory including one or more storage media storing instructions (e.g., the memory 215 of FIG. 2A and/or FIG. 2B). The instructions, when executed individually or collectively by the at least one processor, may cause the electronic device to display, on the display, a viewer screen including an edited image (e.g., the edited image 120 of FIG. 1) corresponding to an original image (e.g., the original image 110 of FIG. 1) and an indicator (e.g., the indicator 1412 of FIG. 14A) corresponding to a first visual object area of the edited image. The instructions, when executed individually or collectively by the at least one processor, may cause the electronic device to receive an input associated with the indicator while displaying the viewer screen. The instructions, when executed individually or collectively by the at least one processor, may cause the electronic device to generate a second visual object area using an artificial intelligence model such that the first visual object area in the edited image is replaced with the second visual object area of the original image having a position corresponding to the position of the first visual object area in the edited image, based on the input.

For example, the instructions, when executed individually or collectively by the at least one processor, may cause the electronic device to obtain, from metadata (e.g., the metadata 122 of FIG. 1) of a file (e.g., the file 124 of FIG. 1) including the edited image, information used to restore the original image using the artificial intelligence model. The instructions, when executed individually or collectively by the at least one processor, may cause the electronic device to generate the second visual object area by executing the artificial intelligence model using at least one of the edited image or information.

For example, the instructions, when executed individually or collectively by the at least one processor, may cause the electronic device to obtain the information including one or more prompts describing the original image from the metadata.

For example, the one or more prompts may include sentences describing at least a portion of the original image before being changed into the edited image.

For example, the instructions, when executed individually or collectively by the at least one processor, may cause the electronic device to search, from the metadata, for one or more prompts to be used to convert the edited image to obtain the original image. The one or more prompts stored in the metadata may be obtained from other prompts that were used to convert the original image into the edited image.

For example, the metadata may include a first portion in which the other prompts are stored and a second portion in which the one or more prompts are stored, including a word having a meaning opposite to a word included in the other prompts.

As used herein, the term "if" will be understood to refer to "when," "upon," "in response to determining," or "in response to detecting," depending on the context. Similarly, "if it is determined that ~" or "if a stated condition or event is detected" will be understood to refer to, optionally, "when determining," or "in response to determining," "when detecting [a stated condition or event]," or "in response to detecting [a stated condition or event]."

The apparatus described above may be implemented with hardware components, software components, and/or a combination of hardware components and software components. For example, the apparatus and components described in the embodiments may be implemented using one or more general-purpose or special-purpose computers, such as e.g., a processor, a controller, an arithmetic logic unit (ALU), a digital signal processor, a microcomputer, a field programmable gate array (FPGA), a programmable logic unit (PLU), a microprocessor, or any other device capable of executing and responding to instructions. A processing device may execute an operating system (OS) and one or more software applications running on the operating system. Further, the processing device may access, store, manipulate, process, and generate data in response to the execution of software. For convenience of understanding, the processing device may be described as being used singularly, but a person having ordinary skill in the art will understand that the processing device may include a plurality of processing elements and/or multiple types of processing elements. For example, the processing device may include a plurality of processors or a single processor and a single controller. In addition, other processing configurations, such as e.g., parallel processors, are also possible.

The software may include a computer program, code, instructions, or a combination of one or more thereof, and may configure a processing device to operate as desired or command the processing device independently or collectively. The software and/or data may be embodied in any type of machine, component, physical device, computer storage medium, or device to be interpreted by the processing device or to provide instructions or data to the processing device. The software may be distributed over networked computer systems to be stored or executed in a distributed manner. The software and data may be stored in one or more computer-readable recording media.

The method according to the embodiments may be implemented in the form of program instructions that can be executed via various computer means and recorded on a computer-readable medium. In such a case, the medium may continuously store a program executable by a computer, or temporarily store the program for execution or download. Further, the medium may be various recording means or storage means in the form of a single or several combined hardware components, and it is not limited to a medium directly connected to a specific computer system, but may be distributed over a network. Examples of the medium may include magnetic media such as hard disks, floppy disks, and magnetic tapes; optical recording media such as CD-ROMs and DVDs; magneto-optical media such as floptical disks; and media configured to store program instructions, including ROM, RAM, flash memory, and the like. Furthermore, other examples of the medium may include recording media or storage media managed by app stores that distribute software applications, sites that supply or distribute various other software, servers and the like.

As described above, although the embodiments have been described with reference to some limited embodiments and drawings, those of ordinary skill in the art may be possible to make various modifications and variations thereof from the above description. For example, appropriate results may be achieved even in a case where the described techniques are performed in a different order from the described method, and/or components such as the described systems, structures, devices, and circuits are coupled or combined in a different form from the described method, or replaced or substituted by other components or equivalents.

Therefore, other implementations, other embodiments, and equivalents to the claims also fall within the scope of the following claims.

## Claims

1. An electronic device, comprising:
a display;
at least one processor comprising processing circuitry; and
memory, comprising one or more storage mediums, storing instructions,
wherein the instructions, when executed by the at least one processor individually or collectively, cause the electronic device to:
display, via the display,
an edited image including a modified object, and
a visual object with respect to the modified object;
receive a user input with respect to the visual object while displaying the edited image; and
based on the user input:
obtain information to replace the modified object with an artificial intelligence (AI) generated object from metadata corresponding to the edited image;
generate an AI generated image by executing the artificial intelligence model using the edited image and the information; and
display, via the display, the AI generated image as a response to the user input.

2. The electronic device of claim 1, wherein the edited image is generated via the artificial intelligence model such that an object included in an original image is replaced with the modified object and the information includes one or more prompts describing the original image or the object.

3. The electronic device of claim 2, wherein the information includes another one or more prompts which was used to convert the original image to the edited image.

4. The electronic device of claim 2, wherein the information includes:
a feature vector associated with the original image, and
data indicating at least portion within the edited image to be replaced by the feature vector.

5. The electronic device of claim 4, wherein the instructions, when executed by the at least one processor individually or collectively, cause the electronic device to:
as at least part of the generating of the AI generated image, generate the AI generated object by executing the artificial intelligence model using the feature vector;
display, in the edited image, an indicator indicating the AI generated object on the at least portion indicated by the metadata.

6. The electronic device of claim 2, wherein the instructions, when executed by the at least one processor individually or collectively, cause the electronic device to:
obtain, from the metadata, pixel information of a first portion of the original image and a prompt with respect to a second portion different from the first portion;
generate, by executing the artificial intelligence model, the AI generated image by synthesizing another object generated using the pixel information corresponding to the first portion and a portion generated using the prompt corresponding to the second portion.

7. The electronic device of claim 2, wherein the instructions, when executed by the at least one processor individually or collectively, cause the electronic device to:
obtain information corresponding to pixel differences between the original image and the edited image from the metadata;
generate, by executing the artificial intelligence model, the AI generated image by changing color of at least one pixel of the edited image by using the information.

8. The electronic device of claim 1, wherein the instructions, when executed by the at least one processor individually or collectively, cause the electronic device to:
obtain a partial image with respect to a portion of the original image which corresponds to the modified object of the edited image, from the metadata;
generate, by executing the artificial intelligence model, the AI generated image using the partial image and the edited image such that the modified object is replaced with the partial image.

9. The electronic device of claim 1, wherein the instructions, when executed by the at least one processor individually or collectively, cause the electronic device to:
display, via the display, the visual object indicating the modified object changed from the original image on at least one portion of the edited image.

10. The electronic device of claim 2, wherein the instructions, when executed by the at least one processor individually or collectively, cause the electronic device to:
based on displaying the edited image of a latest version from among a plurality of versions on the display, display a plurality of indicators including:
an indicator corresponding to the original image; and
other indicators respectively indicating the plurality of versions;
based on another user input to select one indicator from among the plurality of indicators, generate another AI generated image by executing the artificial intelligence model using the edited image and another information corresponding to the selected indicator; and
display, via the display, the other AI generated image.

11. A method of an electronic device comprising a display, comprising:
displaying, via the display,
an edited image including a modified object; and
a visual object with respect to the modified object;
receiving a user input with respect to the visual object while displaying the edited image; and
based on the user input:
obtaining information to replace the modified object with an artificial intelligence (AI) generated object from metadata corresponding to the edited image;
generating an AI generated image by executing the artificial intelligence model using the edited image and the information; and
displaying, via the display, the AI generated image as a response to the user input.

12. The method of claim 11, wherein the edited image is generated via the artificial intelligence model such that an object included in an original image is replaced with the modified object, and the information includes one or more prompts describing the original image or the object.

13. The method of claim 12, wherein the information includes another one or more prompts which were used to convert the original image to the edited image.

14. The method of claim 12, wherein the information includes:
a feature vector associated with the original image and
data indicating at least portion within the edited image to be replaced by the feature vector.

15. The method of claim 14,
wherein the generating comprises:
generating the AI generated object by executing the artificial intelligence model using the feature vector, and
wherein the displaying the restored image comprises:
displaying, in the edited image, an indicator indicating the generated portion on the at least portion indicated by the metadata.
